(19) **Europäisches Patentamt / European Patent Office / Office européen des brevets**

(11) **EP 3 280 527 B1**

(12) **EUROPEAN PATENT SPECIFICATION**

(45) Date of publication and mention
of the grant of the patent:
**27.02.2019 Bulletin 2019/09**

(51) Int Cl.:
*B01J 19/12* [(2006.01)]       *B01J 19/24* [(2006.01)]
*C02F 1/32* [(2006.01)]       *C02F 1/72* [(2006.01)]

(21) Application number: **16725224.6**

(22) Date of filing: **11.04.2016**

(86) International application number:
**PCT/IB2016/052051**

(87) International publication number:
**WO 2016/162858 (13.10.2016 Gazette 2016/41)**

(54) **PURIFYING APPARATUS AND METHOD BASED ON PHOTOCATALYSIS THROUGH MODULATION OF LIGHT EMISSION**

REINIGUNGSVORRICHTUNG UND VERFAHREN AUF BASIS VON PHOTOKATALYSE DURCH MODULATION DER LICHTEMISSION

APPAREIL ET PROCÉDÉ DE PURIFICATION BASÉ SUR LA PHOTOCATALYSE PAR MODULATION DE L'ÉMISSION DE LUMIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.04.2015 IT RM20150147**

(43) Date of publication of application:
**14.02.2018 Bulletin 2018/07**

(73) Proprietor: **Universitá Degli Studi Di Salerno
84084 Fisciano (SA) (IT)**

(72) Inventors:
- **DI CAPUA, Giulia
  84084 Fisciano (SA) (IT)**
- **FEMIA, Nicola
  84084 Fisciano (SA) (IT)**
- **PETRONE, Giovanni
  84084 Fisciano (SA) (IT)**
- **PILERCI, Dionisio
  84084 Fisciano (SA) (IT)**
- **SACCO, Olga
  84084 Fisciano (SA) (IT)**
- **SANNINO, Diana
  84084 Fisciano (SA) (IT)**
- **SPAGNUOLO, Giovanni
  84084 Fisciano (SA) (IT)**
- **VAIANO, Vincenzo
  84084 Fisciano (SA) (IT)**
- **ZAMBONI, Walter
  84084 Fisciano (SA) (IT)**

(74) Representative: **Scilletta, Andrea
IP Sextant s.r.l.
Via Antonio Salandra, 18
00187 Roma (IT)**

(56) References cited:
**US-A1- 2009 184 662      US-A1- 2010 237 254
US-A1- 2013 141 003**

- **E. KOROVIN ET AL: "UV-LED TiO2 photocatalytic oxidation of acetone vapor: Effect of high frequency controlled periodic illumination", APPLIED CATALYSIS B: ENVIRONMENTAL, vol. 163, 4 August 2014 (2014-08-04), pages 143-149, XP055236045, AMSTERDAM, NL ISSN: 0926-3373, DOI: 10.1016/j.apcatb.2014.07.034**
- **CHEN ET AL: "Photodecomposition of o-cresol by UV-LED/TiO2 process with controlled periodic illumination", CHEMOSPHERE, PERGAMON PRESS, OXFORD, GB, vol. 69, no. 2, 12 August 2007 (2007-08-12), pages 184-190, XP022196440, ISSN: 0045-6535, DOI: 10.1016/J.CHEMOSPHERE.2007.04.051**
- **OLUWATOSIN I TOKODE ET AL: "Effect of controlled periodic-based illumination on the photonic efficiency of photocatalytic degradation of methyl orange", JOURNAL OF CATALYSIS, ACADEMIC PRESS, DULUTH, MN, US, vol. 290, 12 March 2012 (2012-03-12), pages 138-142, XP028423131, ISSN: 0021-9517, DOI: 10.1016/J.JCAT.2012.03.011 [retrieved on 2012-03-21]**

**(Cont. next page)**

- KAREN J. BUECHLER ET AL: "Design and Evaluation of a Novel-Controlled Periodic Illumination Reactor To Study Photocatalysis", INDUSTRIAL & ENGINEERING CHEMISTRY RESEARCH., vol. 38, no. 4, 9 March 1999 (1999-03-09), pages 1258-1263, XP055236328, US ISSN: 0888-5885, DOI: 10.1021/ie9806139
- NICOLA FEMIA ET AL: "Light-to-Light: PV-Fed LED Lighting Systems", IEEE TRANSACTIONS ON POWER ELECTRONICS, INSTITUTE OF ELECTRICAL AND ELECTRONICS ENGINEERS, USA, vol. 28, no. 8, 1 August 2013 (2013-08-01) , pages 4063-4073, XP011488450, ISSN: 0885-8993, DOI: 10.1109/TPEL.2012.2229297
- SHUN-CHUNG WANG ET AL: "High-Power-Factor Electronic Ballast With Intelligent Energy-Saving Control for Ultraviolet Drinking-Water Treatment Systems", IEEE TRANSACTIONS ON INDUSTRIAL ELECTRONICS, IEEE SERVICE CENTER, PISCATAWAY, NJ, USA, vol. 54, no. 1, 1 January 2008 (2008-01-01), pages 142-153, XP011198018, ISSN: 0278-0046

**Description**

The present invention concerns a purifying apparatus based on the photocatalysis through a modulation controlled by the light irradiation that allows in an efficient, reliable, simple, and inexpensive way to increase purification of contaminated fluids, such as wastewater. The present invention further concerns the related purifying method.

For the reduction of the environmental pollution, in particular for the purification of contaminated fluids, in recent years apparatuses based on the photocatalysis have been developed which comprise photocatalytic reactors subjected to light irradiation. Photocatalysis is the acceleration of a chemical reaction activated by light in presence of a semiconductor material (dispersed or deposited on supports in the fluid to be purified) operating as catalyst; in this case, the semiconductor material is also called photocatalyst. As known, the absorption of an amount of light energy larger than or equal to the energy amount $E_{bg}$ corresponding to the semiconductor band gap causes a transfer of electrons, having negative charge, from the valence band to the conduction one and consequently the generation of electronic holes, having positive charge, in the valence band. The electron-electronic hole pair may react with an electron acceptor or donor species, that is typically or is part of a contaminant of the fluid to be purified, that is adsorbed on the semiconductor surface giving rise to reduction and/or oxidation chemical reactions, respectively. In other words, the photocatalyst receives photons from the light source for generating active sites initiating the chemical reactions. These processes are very aggressive and lead to the destruction of bacteria or viruses and they oxidise organic molecules thus forming carbon dioxide ($CO_2$) and water ($H_2O$).

For instance, in the last decade, the use of titanium dioxide ($TiO_2$) as photocatalyst has been the focal point of many studies in which it has been employed in treatment of polluting substances in both liquid and gas fluids. In this regard, the semiconductor catalyst most widely used in photo-induced purification processes is the titanium dioxide in anatase form.

The use of solar radiation allows to significantly reduce the energy costs related to the photocatalytic processes. However, the high band-gap of titanium dioxide, equal to 3,2 eV for the anatase form, restricts the fraction of solar radiation capable to cause formation of hole-electron pairs. In fact, only 4-5% of sun light reaching the Earth's surface has a wavelength being within the range 300-400 nm (near ultraviolet - UV) that has energy sufficient to the formation of hole-electron pairs; consequently, such natural source, i.e. sun light, is generally not sufficient. Also, in order to obtain a high photocatalytic activity, it is also necessary a uniform distribution of light irradiation. Therefore, one of the fundamental elements in heterogeneous photocatalysis is the light source.

In the prior art purifying apparatuses based on photocatalysis, the light sources which have been first used are conventional ultraviolet (UV) mercury (Hg) or xenon (Xe) vapour lamps. However, such lamps are toxic, fragile and with low energy efficiencies. Also, they are produced in certain shapes and geometries which, as a matter of fact, limit the designing of the photocatalytic reactor and do not easily and efficiently allow a distribution of adequately uniform light irradiation.

The latest purifying apparatuses use as light sources the light emitting diodes (LEDs), usually arranged in LED lamps, which are non-toxic and have extremely reduced size allowing a flexibility of spatial arrangement in the design of the photocatalytic reactors for obtaining a uniform distribution of light irradiation. Also, the LED lamps allow a control of the delivered energy that causes the LEDs to operate even at lower temperatures with respect to other light sources, consequently obtaining both an energy saving and a saving on cooling costs. Some examples of photocatalytic reactors employing LEDs as light sources are disclosed in documents WO 2012/010645 A1, US 2008/311011 A1, US 2010/0176067 A1 and WO 2009/144764 A2, while the paper by N. Femia et al. in "Light-to-Light: PV-Fed LED Lighting Systems", Power Electronics, IEEE Transactions, Vol. 28, No. 8, August 2013, pp. 4063-4073, discloses a converter of light energy from sun light to UV emission applied to photocatalytic reactors. Such photocatalytic reactors based on LEDs use light irradiation for speeding up the chemical reactions by employing LED light sources having photon flow (i.e. light intensity) that is constant during operation of the photocatalytic reactor.

Oluwatosin I. Tokode et al. in "Effect of controlled periodic-based illumination on the photonic efficiency of photocatalytic degradation of methyl orange", Journal of Catalysis, Vol. 290, 2012, pp. 138-142 and Korovin E. et al. in "UV-LED TiO2 photocatalytic oxidation of acetone vapor: Effect of high frequency controlled periodic illumination", Applied Catalysis B: Environmental, Vol. 163, available online August 2014, pp. 143-149, disclose photocatalytic purification reactors and processes wherin LEDs are driven in dimming mode according to a dimming duty-cycle.

However, even the latest prior art purifying apparatuses suffer from some drawbacks.

In fact, such apparatuses are not yet fully efficient, since purification of contaminated fluids is not particularly high and, consequently, requires long times of operation of the apparatuses which, in turn, entail significant costs for the purification process.

Therefore, it is an object of the present invention to allow in an efficient, reliable, simple, and inexpensive way to increase purification of contaminated fluids, such as wastewater, through a photocatalytic reactor.

It is specific subject matter of the present invention a purifying apparatus according to claim 1 comprising a reactor and one or more light sources, wherein the reactor is configured to receive a light irradiation emitted by said one or more light sources and to contain inside a fluid to be purified and at least one catalyst configured to absorb said light irradiation and to activate at least one photocatalysis that removes at least one polluting substance inside the fluid, wherein the purifying apparatus comprises switching means configured to be supplied by at least one power supply apparatus and to drive said one or more light sources in dimming mode according to a dimming duty-cycle $t_{ON}/T_{dim}$, wherein said one or more light sources are kept on for a switching-on time $t_{ON}$ within a dimming period $T_{dim}$, where $t_{ON} \leq T_{dim}$, and kept off for a switching-off time $t_{OFF}$, equal to ($T_{dim}$ - $t_{ON}$), wherein the purifying apparatus comprises processing and control means configured to send to said switching means a dimming signal $d_{LED}(t)$, that is time-varying, equal to the instantaneous dimming duty-cycle $t_{ON}/T_{dim}$ according to which said switching means drives said one or more light sources in dimming mode, the purifying apparatus being characterised in that the dimming signal $d_{LED}(t)$ that said processing and control means is configured to send to said switching means has a waveform selected from or equal to a combination of waveforms selected from the group comprising or consisting of:

- periodic waveforms,
- pseudo-periodic waveforms.

In other words, the dimming duty-cycle, according to which said one or more light sources are driven, is equal to a time-varying dimming signal $d_{LED}(t)$ (i.e. The dimming signal $d_{LED}(t)$ is modulated in the time domain). Advantageously, variations of the dimming signal $d_{LED}(t)$ are slower than the duty-cycle period (i.e. of the dimming period $T_{dim}$), even if this is not an essential feature to the invention; by way of example, and not by way of limitation, the duty-cycle period (i.e. The dimming period $T_{dim}$) may range from tens of milliseconds to seconds, while a dimming signal $d_{LED}(t)$ having periodic waveform may have period ranging from minutes to tens of minutes. In the following, the dimming signal $d_{LED}(t)$ is also indicated with "$d_{LED}$".

According to another aspect of the invention, the periodic waveforms may comprise or consist of sinusoidal waveforms, triangular waveforms, sawtooth waveforms, square-wave waveforms and combinations thereof.

According to a further aspect of the invention, the waveform of the dimming signal $d_{LED}(t)$ may be selected from the group comprising or consisting of:

a sinusoidal function, as follows:

$$d_{LED}(t) = \frac{D_{max}}{2}[1 + \sin(\omega t)]$$

where $D_{max}$ is a maximum value of an amplitude of the dimming signal $d_{LED}(t)$, lower than or equal to 100%, and $\omega$ is an angular frequency of the dimming signal $d_{LED}(t)$, and
a triangular function with period $T_d$, wherein in each period starting at an instant assumed as $t=0$ it is:

$$d_{LED}(t) = \begin{cases} \dfrac{D_{max}}{T_r}t, & t \in [0, T_r] \\ D_{max} - \dfrac{D_{max}}{T_f}t, & t \in [T_r, T_d] \end{cases}$$

with $T_f=T_d-T_r$, where $D_{max}$ is a maximum value of an amplitude of the dimming signal $d_{LED}(t)$, lower than or equal to 100%, and $T_r$ and $T_f$ are respectively the rise time and the fall time of the waveform, optionally equal to each other and equal to the half of the period $T_d$.

According to an additional aspect of the invention, the pseudo-periodic waveforms may comprise or consist of sinusoidal waveforms having time-varying frequency and/or amplitude, triangular waveforms having time-varying frequency and/or amplitude, sawtooth waveforms having time-varying frequency and/or amplitude, square-wave waveforms having time-varying frequency and/or amplitude and combinations thereof.

According to another aspect of the invention, the waveform of the dimming signal $d_{LED}(t)$ may be a sinusoidal function having constant peak-peak amplitude and time-varying frequency, as follows:

$$d_{LED}(t) = \frac{D_{max}}{2}[1 + \sin(\omega(t)t)]$$

where $D_{max}$ is a maximum value of the amplitude of the dimming signal $d_{LED}(t)$, lower than or equal to 100%, and $\omega(t)$ is a time-varying angular frequency that optionally starts from an initial value $\omega_0$, wherein the varying angular frequency $\omega(t)$ more optionally decreases with time, still more optionally according to a function selected from the group comprising a linear function, as follows:

$$\omega(t) = \omega_0 - \frac{\omega_0}{T_{max}}t$$

where $T_{max}$ is a maximum time interval in which the angular frequency $\omega(t)$ may vary, and an exponential function, as follows:

$$\omega(t) = \omega_0 e^{-t/\tau}$$

where $\tau$ is a time constant.

According to a further aspect of the invention, the waveform of the dimming signal $d_{LED}(t)$ may be a triangular function with constant peak-peak amplitude and time-varying frequency, as follows:

$$d_{LED}(t) = \begin{cases} \dfrac{D_{max}}{T_r(t)}t, & t \in [0, T_r(t)] \\ D_{max} - \dfrac{D_{max}}{T_f(t)}t, & t \in [T_r(t), T_d(t)] \end{cases}$$

with $T_f(t) = T_d(t) - T_r(t)$, where $D_{max}$ is a maximum value of the amplitude of the dimming signal $d_{LED}(t)$ lower than or equal to 100%, $T_d(t)$ is a varying period of the dimming signal $d_{LED}(t)$ and $T_r(t)$ and $T_f(t)$ are respectively a varying rise time and a varying fall time of the dimming signal $d_{LED}(t)$, wherein the varying period $T_d(t)$ and the varying rise and fall times $T_r(t)$ and $T_f(t)$ optionally start from respective initial values $T_{d0}$, $T_{r0}$ and $T_{f0}$ satisfying the condition

$$T_{r0} + T_{f0} = T_{d0},$$

wherein the varying period $T_d(t)$ and the varying rise and fall times $T_r(t)$ and $T_f(t)$ more optionally decrease with time, still more optionally according to a triplet of respective functions selected from the group comprising a triplet of linear functions, as follows:

$$T_d(t) = T_{d0} - \frac{T_{d0}}{T_{max}}t$$

$$T_r(t) = T_{r0} - \frac{T_{r0}}{T_{max}}t$$

$$T_f(t) = T_{f0} - \frac{T_{f0}}{T_{max}}t$$

where $T_{max}$ is a maximum time interval in which the period $T_d(t)$ may vary, and a triplet of exponential functions, as follows:

$$T_d(t) = T_{d0} e^{-t/\tau}$$

$$T_r(t) = T_{r0} e^{-t/\tau}$$

$$T_f(t) = T_{f0}e^{-t/\tau}$$

where $\tau$ is a time constant.

According to an additional aspect of the invention, the waveform of the dimming signal $d_{LED}(t)$ may be a sinusoidal function with fixed frequency and time-varying peak-peak amplitude, as follows:

$$d_{LED}(t) = D_0 + D_{max}(t) \cdot \sin(\omega t)$$

where $D_0$ is a constant offset value of the amplitude of the dimming signal $d_{LED}(t)$, lower than or equal to 100%, and $D_{max}(t)$ is a time-varying portion of the amplitude of the sinusoidal signal, wherein the varying portion $D_{max}(t)$ optionally starts from an initial value $D_{max0}$ lower than or equal to (100% - $D_0$), wherein the varying portion $D_{max}(t)$ more optionally decreases with time, still more optionally according to a function selected from the group comprising a linear function, as follows:

$$D_{max}(t) = D_{max0} - \frac{(D_{max0} - D_k)}{T_{max}}t$$

where $T_{max}$ is a time interval in which the period $T_d(t)$ may vary and at the end of which the varying portion $D_{max}(t)$ assumes a constant value $D_k$ lower than $D_{max0}$, and an exponential function, as follows:

$$D_{max}(t) = D_{max0}e^{-t/\tau}$$

where $\tau$ is a time constant.

According to another aspect of the invention, the waveform of the dimming signal $d_{LED}(t)$ may be a square-wave function having fixed frequency and peak-peak amplitude varying according to a triangular wave, as follows:

$$d_{LED}(t) = \begin{cases} D_0 + D_{max}(t), & t \in \left[0, \frac{T_q}{2}\right] \\ D_0 + D_{max}(t), & t \in \left[\frac{T_q}{2}, T_q\right] \end{cases}$$

where $T_q$ is a fixed period of the square waveform, $D_0$ is a constant offset value of the amplitude of the dimming signal $d_{LED}(t)$ larger than 0% and lower than 100%, and $D_{max}(t)$ is a time-varying portion of the amplitude of the dimming signal $d_{LED}(t)$, wherein the varying portion $D_{max}(t)$ optionally varies according to a triangular-wave function between a lower value $D_{low}$, larger than 0% and lower than (100% - $D_0$), and an upper value $D_{up}$, larger than the lower value $D_{low}$ and lower than (100% - $D_0$), having period $T_{dD}$ longer than $T_q$, wherein in each period starting at an instant assumed as $t=0$ it is:

$$D_{max}(t) = \begin{cases} D_{low} + \frac{D_{up}}{T_{rD}}t, & t \in [0, T_{rD}] \\ D_{up} - \frac{(D_{up} - D_{low})}{T_{fD}(t)}t, & t \in [T_{rD}, T_{dD}] \end{cases}$$

with $T_{fD} = T_{dD} - T_{rD}$, where $T_{rD}$ and $T_{fD}$ are respectively a rise time and a fall time of the triangular-wave function according to which the varying portion $D_{max}(t)$ of the square-wave signal varies, wherein $T_{rD}$ and $T_{fD}$ are more optionally equal to each other.

According to a further aspect of the invention, said switching means may comprise a switching DC-DC buck converter and said processing and control means may comprise a first controlling device configured to send to the switching DC-DC buck converter the dimming signal $d_{LED}(t)$.

According to an additional aspect of the invention, said one or more light sources may be selected from the group comprising or consisting of LED diodes, compact fluorescent lamps, and incandescent lamps.

According to another aspect of the invention, said one or more light sources may be one or more ultraviolet LED diodes, whereby the reactor is configured to receive an UV light irradiation emitted by said one or more ultraviolet LED diodes.

According to a further aspect of the invention, said at least one power supply apparatus may be selected from the group comprising a mains, accumulators, powered energy generators and renewable energy sources selected from the group comprising photovoltaic panels, power wind sources, fuel cells, and biomass energy sources.

According to an additional aspect of the invention, said at least one power supply apparatus may comprise a photovoltaic panel the output of which is connected to a switching boost converter, wherein the output of the boost converter is connected to the switching DC-DC buck converter, said at least one power supply apparatus further comprising a battery pack connected to the output of the switching boost converter, wherein said processing and control means further comprises a second controlling device, connected to the output of the photovoltaic panel, that is configured to execute a tracking of the maximum power point of the photovoltaic panel and to send to the switching boost converter a control signal $d_{MPP}$ configured to regulate the switching boost converter for drawing maximum power from the photovoltaic panel, said processing and control means also comprising a third controlling device connected to the battery pack and to the first controlling device, wherein the third controlling device is configured to make the identification of a charge state of the battery pack for controlling the battery pack so that the latter compensates variations of instant power drawn from the photovoltaic panel and for charging the battery pack, whereby the switching boost converter, the switching DC-DC buck converter, the first controlling device, the second controlling device, and the third controlling device are part of a light energy conversion apparatus.

It is still specific subject matter of the present invention a method according to claim 14 for purifying a fluid to be purified having at least one polluting substance, wherein the fluid is contained inside a reactor configured to receive a light irradiation emitted by one or more light sources, wherein the reactor contains inside at least one catalyst configured to absorb said light irradiation and to activate at least one photocatalysis that removes said at least one polluting substance, the method comprising the following step:

> A. driving said one or more light sources in dimming mode according to a dimming duty-cycle $t_{ON}/T_{dim}$, wherein said one or more light sources are kept on for a switching-on time $t_{ON}$ within a dimming period $T_{dim}$, where $t_{ON} \leq T_{dim}$, and kept off for a switching-off time $t_{OFF}$, equal to $(T_{dim} - t_{ON})$, whereby said one or more light sources are driven in dimming mode according to a dimming signal $d_{LED}(t)$ equal to the instantaneous dimming duty-cycle $t_{ON}/T_{dim}$, the method being characterised in that the dimming signal $d_{LED}(t)$ has a waveform selected from or equal to a combination of waveforms selected from the group comprising or consisting of:
>
> - periodic waveforms,
> - pseudo-periodic waveforms.

According to another aspect of the invention, such waveform of the dimming signal $d_{LED}(t)$ may be selected from the group comprising sinusoidal waveforms, triangular waveforms, sawtooth waveforms, square-wave waveforms, optionally having time-varying frequency and/or amplitude, and combinations thereof.

The purifying apparatus, and the related purifying method, according to the invention is based on induced photocatalytic processes wherein a light irradiation emitted by one or more light sources is regulated through modulation and control techniques. In particular, in the preferred embodiment of the invention, the apparatus is configured to convert light energy from natural light, i.e. sun light, into an ultraviolet (UV) emission through the use of an array of power LED diodes emitting UV radiation, wherein the emission by the LEDs is regulated through modulation and control techniques performed by a microcontroller.

The advantages offered by the purifying apparatus, and by the related purifying method, according to the invention with respect to the prior art solutions are numerous and significant.

First of all, the purifying apparatus and the related purifying method allow to increase in an efficient, reliable, simple, and inexpensive way purification of contaminated fluids, such as wastewater.

Moreover, techniques of modulation of light intensity of the LEDs allow to regulate light at proper levels in function of the application type of the purifying apparatus, and related purifying method, with a consequent reduction of the amount of consumed energy.

The purifying apparatus, and the related purifying method, in particular (but not only) in its preferred embodiment, is usable in many industrial applications for reducing environmental pollution, such as for instance applications in the industry of treatment of fluids containing recalcitrant substances, applications of reduction of environmental pollution in places with high sun radiation levels and difficultly reachable with power lines, such as boats and areas of emerging countries.

The present invention will be now described, by way of illustration and not by way of limitation, according to its preferred embodiments, by particularly referring to the Figures of the annexed drawings, in which:

Figure 1 shows a block diagram of a preferred embodiment of the purifying apparatus according to the invention;
Figure 2 shows a block diagram of a part of the purifying apparatus of Figure 1;
Figure 3 shows the results of first tests performed with the purifying apparatus of Figure 1 the LEDs of which are turned on according to operation modes of the prior art;
Figures 4-9 show the results of six tests performed with the purifying apparatus of Figure 1 the LEDs of which are turned on according to operation modes according to the invention, as well as the six curves representing such modes of operation of the LEDs of the purifying apparatus of Figure 1.

In the Figures identical reference numerals will be used for alike elements.

In the following the purifying apparatus according to the invention will be described with particular reference to a preferred embodiment using a converter of light energy from natural light, i.e. sun light, into a UV emission through the use of an array of power UV LEDs, wherein the emission by the LEDs is regulated through modulation and control techniques performed by a microcontroller. However, it must be understood that other embodiments of the purifying apparatus, and of the related purifying method, according to the invention may use other apparatuses for supplying the LED diodes (the UV emission of which is regulated through the modulation techniques of the invention) different from the photovoltaic panels connected to the converter of the preferred embodiment of the invention, for instance other forms of renewable energy sources, such as for example power wind sources, fuel cells, biomass energy sources, or also conventional energy sources, such as the mains or accumulators, or even conventional powered energy generators, and/or which may use light sources different from the power UV LEDs, as for instance compact fluorescent lamps aka CFL (Compact Fluorescent Lamps) operating in dimming mode, or even incandescent lamps operating in dimming mode at frequencies lower than those illustrated for the preferred embodiment of the purifying apparatus, still remaining within the scope of protection of the present invention.

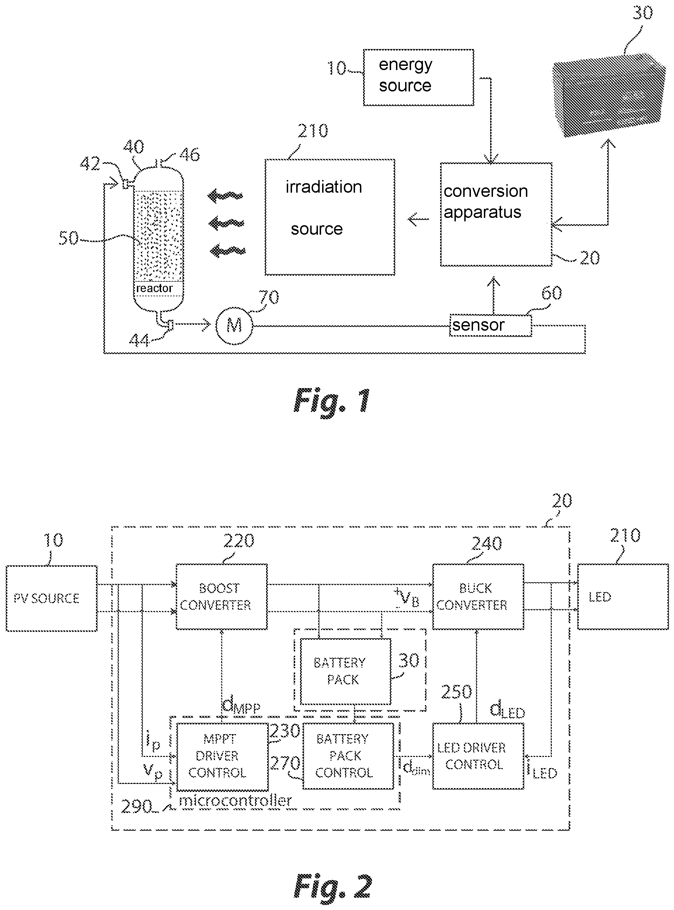

With reference to Figure 1, it may be observed that the preferred embodiment of the purifying apparatus according to the present invention comprises a photovoltaic source, in particular (at least) one photovoltaic panel 10, connected to an converter apparatus 20 configured to convert light energy (such energy conversion is also indicated as Light-to-Light or LtL conversion) for supplying a plurality of UV LEDs 210, and a battery pack 30 also connected to the converter apparatus 20. Moreover, the purifying apparatus of Figure 1 comprises a transparent reactor 40, configured to receive the UV light irradiation emitted by the UV LEDs 210 of the converter apparatus 20 and for containing inside a catalyst for allowing a photocatalysis; the catalyst is a semiconductor material dispersed or deposited on macroscopic supports in the fluid to be purified, wherein the macroscopic supports, preferably transparent, have spherical and/or cylindrical and/or hollow cylinder- and/or honeycomb monolith- shape of size up to 10.000 time larger than the size of the semiconductor material in suspension in the fluid to be purified. In the preferred embodiment, an amount of titanium dioxide equal to 180 mg deposited on the surface of glass balls of 5 mm radius is present within reactor as catalyst: through the transparent walls of the reactor 40, UV photons emitted by the UV LEDs 210 of the converter apparatus 20 impact on the titanium dioxide balls, thus triggering the mechanism of absorption of the UV light that gives rise to photocatalysis, entailing the removal of a rate of polluting substances present in a fluid 50 to be purified (contained within the reactor 40) in the form of $CO_2$ that goes into the surrounding environment through an opening 46. In this regard, the reactor 40 is provided with an inlet duct 42 and with an outlet duct 44 configured to allow the fluid 50 to be purified to enter and exit from the reactor 40. In particular, the converter apparatus 20 controls the light emission of the UV LEDs 210 irradiating the transparent reactor 40 for inducing the photocatalysis. The preferred embodiment of the purifying apparatus further comprises (at least) one sensor device 60 configured to detect in real time the concentration of (at least) one corresponding polluting substance present in the fluid 50 to be purified, that is advantageously caused to flow through a pump 70 (p.es. a peristaltic pump) along a hydraulic circuit of which the reactor 40 is part.

The converter apparatus 20 is configured to control the LEDs 210 so that these operate in dimming mode, wherein the LEDs 210 are kept on for a determined switching-on time $t_{ON}$ (ON time) within a determined operation period $T_{dim}$ (dimming period, where $t_{ON} \leq T_{dim}$) and kept off for the remaining time $t_{OFF}$, where $t_{OFF} = (T_{dim} - t_{ON})$, of the dimming period $T_{dim}$, where such time $t_{OFF}$ is the switching-off time (OFF time). The intensity of the current of the LEDs 210 in the switching-on state, the dimming period $T_{dim}$ and the ratio $t_{ON}/t_{OFF}$ between the switching-on time $t_{ON}$ and the switching-off time $t_{OFF}$ are settable through a microcontroller with which the same converter apparatus 20 is provided, possibly also by an operator through input (and possibly output) interface means, such as a keyboard (or a touch screen display), connected to the microcontroller. The dimming duty-cycle is defined as the ratio $t_{ON}/T_{dim}$ between the switching-on time $t_{ON}$ and the dimming period $T_{dim}$.

The converter apparatus 20 of the preferred embodiment of the purifying apparatus according to the invention has the same circuit architecture disclosed in the aforementioned paper by N. Femia et al., wherein the operation of the LEDs 210 in dimming mode occurs by turning off the whole driving stage of the same LEDs 210. This allows to maximise the energy efficiency, since while the LEDs 210 are off there are no losses associated to the operation of the conversion section of the converter apparatus 20 devoted to the power supply of the LEDs 210. The duration of the switching-on time $t_{ON}$ of the LEDs 210 is modulated through a dimming signal, i.e. a signal for switching the LEDs 210 on coming from a controller driving the LEDs 210 with which the converter apparatus 20 is provided.

Figure 2 shows the architecture of the converter apparatus 20, that is connected to the photovoltaic panel 10, advantageously made in monocrystalline silicon, and that is configured to supply the UV LEDs 210 (designed to illuminate the reactor 40 of Figure 1) by using the energy of the solar radiation illuminating the photovoltaic panel 10. The specific number, the specific features and the specific configuration of the UV LEDs 210 is not an essential feature to the present invention. In particular, in Figure 2, the battery pack 30 is shown surrounded by the components of the converter apparatus 20 (from which it is represented as isolated through a dashed rectangle).

The output of the photovoltaic panel 10 is connected to a switching boost converter 220 (with DC output and output voltage $V_B$) that is controlled by a controlling device 230 configured to execute a tracking of the maximum power point (MPPT - Maximum Power Point Tracking) of the photovoltaic panel 10, to the output of which the MPPT controlling device 230 is also connected. The output of the boost converter 220 is connected to a so-called switching buck converter 240 (i.e. a DC-DC converter giving an average output voltage lower than the input DC voltage by varying the duty cycle of the switches connecting the input to the output) configured to drive the UV LEDs 210 and that is controlled by a respective controlling device 250, that receives a detection of the output current $i_{LED}$ of the buck converter 240 supplying the UV LEDs 210, which controlling device 250 is configured to send a dimming signal $d_{LED}$, that provides the buck converter 240 with the instantaneous dimming duty-cycle $t_{ON}/T_{dim}$ and that controls the operation of the buck converter 240 so as to switch the UV LEDs 210 on with a dimming duty-cycle $t_{ON}/T_{dim}$ equal to the instantaneous value of the dimming signal $d_{LED}$; in other words, the controlling device 250 is configured to regulate the average output current of the buck converter 240 through a switching that allows to cause the UV LEDs 210 to operate in dimming mode consequently regulating the photocatalysis process. The output of the boost converter 220 is further connected to the battery pack 30, connected to a respective controlling device 270 in turn connected to the device 250 controlling the buck converter 240; the controlling device 270 permits to manage the difference between the energy drawn from the panel 10 and that required by the load of the UV LEDs 210.

In the preferred embodiment of the purifying apparatus according to the invention, the MPPT controlling device 230 and the device 270 controlling the battery pack 30 are made through a microcontroller digital device (represented in Figure 2 with the reference numeral 290), while the switching buck converter 240 and the respective controlling device 250 are made through discrete power devices and integrated control analog circuits. However, it must be understood that other embodiments may implement the various components of the converter apparatus 20 by using one or more other microcontrollers and/or electronic analog and/or digital components available on the market, since the specific arrangement of the electronics implementing the converter apparatus 20 is not an essential feature to the present invention.

Hence, the converter apparatus 20 is configured to simultaneously execute three control methods in parallel, which allow the purifying apparatus according to the invention to operate at high efficiency levels both from the energy point of view and from the point of view of purification of the fluid 40 present within reactor 40.

The first control method, executed by the MPPT controlling device 230, carries out the regulation of the boost converter 220 through a control signal $d_{MPP}$, for drawing the maximum power from the photovoltaic panel 10 through an algorithm of Maximum Power Point Tracking (MPPT), whereby the boost converter 220, thanks to the MPPT tracking, carries out an impedance matching between the inner resistance of the photovoltaic panel 10 and the resistance of the load of the UV LEDs 210.

The second control method, executed by the device 270 controlling the battery pack 30, carries out the identification of the charge state of the battery pack 30 and the management of the energy balance, wherein the battery pack 30 compensates the possible fluctuations of the solar radiation and the consequent variations of the instant power drawn from the photovoltaic panel 10 and given to the buck converter 240 through the boost converter 220 for supplying the UV LEDs 210. In particular, in each instant the UV LEDs 210 operate at a determined level of light intensity corresponding to a specific value of the dimming duty-cycle $t_{ON}/T_{dim}$, requiring a corresponding power. If the power drawn from the photovoltaic panel 10 is lower than the power required by the LEDs 10, the battery pack 30 gives the necessary energy in order to maintain the dimming duty-cycle $t_{ON}/T_{dim}$ at the specific value; in this case, if the battery voltage reaches very low levels or the discharge current reaches very high levels, the device 250 controlling the buck converter 240 adapts the power given to the UV LEDs 210 at the available power (substantially equal only to the power drawn by the photovoltaic panel 10), changing the strategy of modulation of the same UV LEDs 210. Instead, when the solar irradiance level is high, whereby the electric power delivered by the photovoltaic panel 10 is higher than the power required by the UV LEDs 210, the energy excess charges the battery pack 30; in this case, if the battery voltage reaches very high levels or the charge current reaches very high levels, the device 250 controlling the buck converter 240 increases the power given to the UV LEDs 210, changing the strategy of modulation of the same UV LEDs 210.

The third control method, executed by the device 250 controlling the buck converter 240, carries out the regulation of photocatalysis through the control of the current $i_{LED}$ supplying the UV LEDs 210 through a proper modulation of the dimming signal $d_{LED}$, that is equal to the instantaneous value of the dimming duty-cycle $t_{ON}/T_{dim}$ according to which the buck converter 240 controls the operation of the UV LEDs 210, that consequently produces a corresponding modulation of the brightness of the UV LEDs 210. Through such modulation, the purifying apparatus according to the invention is capable to increase the rate of removal of polluting substances inside the fluid 50 to be purified within the reactor 40.

The inventors have conducted experimental tests with the preferred embodiment of the purifying apparatus according to the invention in which they have applied the proper modulations of the dimming signal $d_{LED}$, which are illustrated in the following, with which water containing methylene blue as pollutant has been purified. In general, both the waveforms of the dimming signal $d_{LED}$, resulting from the modulation, and the characteristic parameters of such waveforms may be freely set, possibly also in function of the polluting species contained in the fluid to be purified.

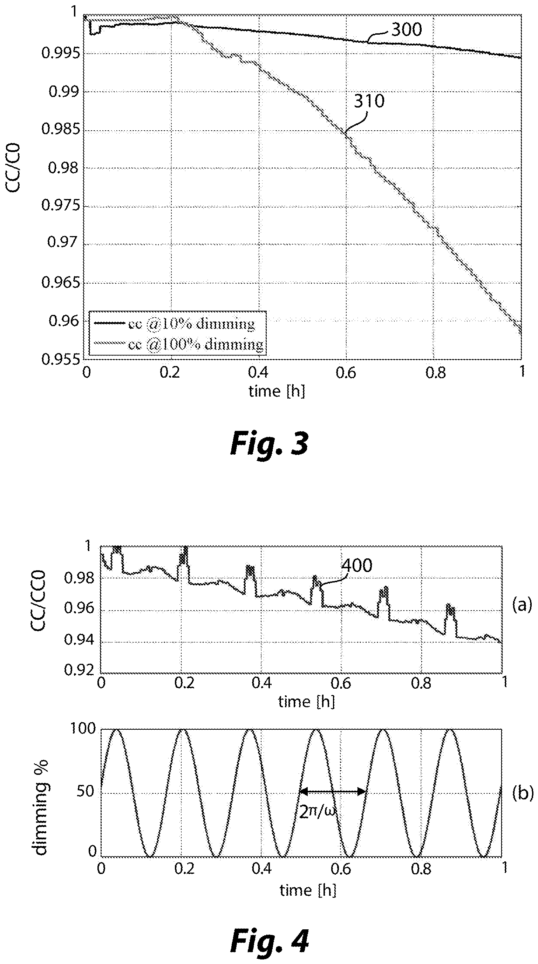

The inventors have made first tests with constant values of dimming duty-cycle $t_{ON}/T_{dim}$, i.e. without any modulation of the dimming signal $d_{LED}$. Figure 3 shows the time patterns of the decay 300 and 310 of the concentration normalised with respect to the initial value of the polluting species (i.e. methylene blue) with values of dimming duty-cycle $t_{ON}/T_{dim}$ equal to 10% and 100%, respectively; in particular, such values of dimming duty-cycle $t_{ON}/T_{dim}$ may be considered as the limit values in terms of speed of removal of the polluting species (i.e. speed of purification of the fluid to be purified) and used energy. Also, the tests have been carried out with the photovoltaic panel 10 being inactive (whereby it has been isolated from the whole purifying apparatus) in order to emphasise the energy aspect with reference to the battery pack 30. It may be observed that the decay 300 of the normalised concentration with a value of dimming duty-cycle $t_{ON}/T_{dim}$ equal to 10% is slow, but at the same time it has the lowest consumption of energy drawn from the battery pack 30. The decay 310 of the normalised concentration with a value of dimming duty-cycle $t_{ON}/T_{dim}$ equal to 100% is higher, but, since the LEDs continuously illuminates, has the highest consumption of electric energy.

Although these two values may seem to represent limit cases in terms of decay and consumption, the following experimental tests, conducted with proper modulations of the dimming signal $d_{LED}$ controlled by the device 250 controlling the buck converter 240, have shown that the decay of the concentration of the polluting species is better and occurs with a higher energy efficiency. In particular, the waveform of the dimming signal $d_{LED}$ resulting from the modulation is a waveform selected from or equal to a combination of waveforms selected from the group comprising or consisting of:

- periodic waveforms, having constant amplitude and frequency (e.g. sinusoidal waveforms, triangular waveforms, sawtooth waveforms and square-wave waveforms and combinations thereof),
- pseudo-periodic waveforms, wherein pseudo-periodic waveforms in the present description and claims mean periodic functions with modulation of amplitude and/or frequency, i.e. with varying amplitude and/or frequency which optionally monotonically decrease or increase (e.g. sinusoidal waveforms, triangular waveforms, sawtooth waveforms and square-wave waveforms with varying amplitude and/or frequency and combinations thereof), and
- monotonically decreasing or increasing aperiodic waveforms.

In the following, the results of the tests are described which have been conducted with modulations such that they produce waveforms of the dimming signal $d_{LED}$ which are sinusoidal, triangular, sawtooth or square-wave, optionally with varying frequency (hence also with period and angular frequency) and/or amplitude.

Figure 4a shows the decay 400 over time of the concentration normalised with respect to the initial value of the polluting species (i.e. methylene blue) when the waveform of the dimming signal $d_{LED}$ is a sinusoidal function, shown in Figure 4b, with peak-peak amplitude 100% and period $T$=10 minutes:

$$d_{LED}(t) = \frac{D_{max}}{2}[1 + \sin(\omega t)]$$

where $D_{max}$ is the maximum value of the amplitude of the dimming signal $d_{LED}$, equal to 100%, and $\omega$ is the angular frequency for the period $T$ of 10 minutes. However, it must be understood that, possibly also in function of the polluting species to remove that is contained in the fluid to be purified, the value of $D_{max}$ may be freely set at any value lower than or equal to 100% and similarly $\omega$ may be freely set at any value.

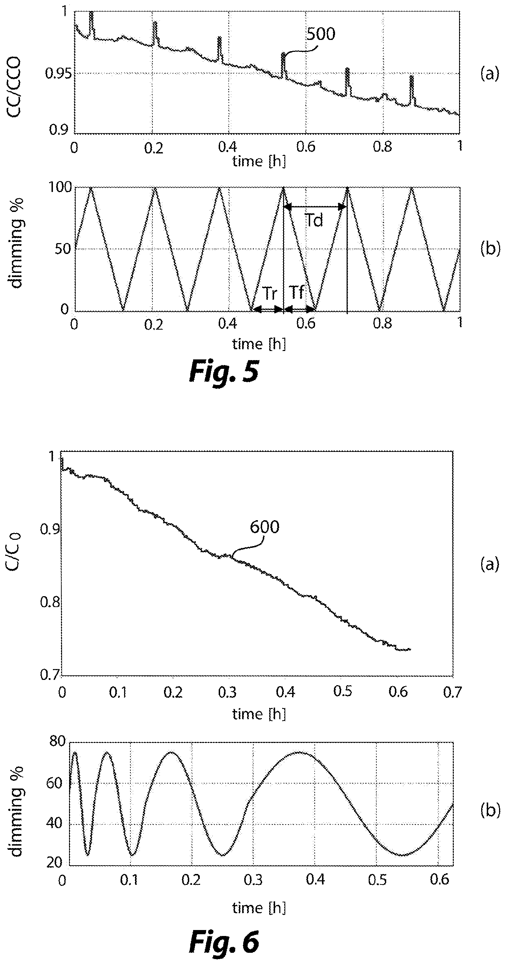

Figure 5a shows the decay 500 over time of the concentration normalised with respect to the initial value of the polluting species (i.e. methylene blue) when the waveform of the dimming signal $d_{LED}$ is a triangular function, shown in Figure 5b, with peak-peak amplitude 100% and period $T_d$=10 minutes, wherein in each period starting at an instant assumed as $t=0$ it is:

$$d_{LED}(t) = \begin{cases} \dfrac{D_{max}}{T_r}t, & t \in [0, T_r] \\ D_{max} - \dfrac{D_{max}}{T_f}t, & t \in [T_r, T_d] \end{cases}$$

with $T_f = T_d - T_r$

where $D_{max}$ is the maximum value of the amplitude of the dimming signal $d_{LED}$, equal to 100%,
$T_r$ and $T_f$ are respectively the rise time and the fall time of the waveform equal to each other and equal to the half of the period $T_d$. However, it must be understood that, possibly also in function of the polluting species to remove that is contained in the fluid to be purified, the value of $D_{max}$ may be freely set at any value lower than or equal to 100% and similarly the period $T_d$ and the rise and fall times $T_r$ and $T_f$ may be freely set at any value.

Figure 6a shows the decay 600 over time of the concentration normalised with respect to the initial value of the polluting species (i.e. methylene blue) when the waveform of the dimming signal $d_{LED}$ is a sinusoidal function, shown in Figure 6b, with constant peak-peak amplitude and equal to 100% and time-varying frequency, hence with varying period T and angular frequency $\omega$:

$$d_{LED}(t) = \frac{D_{max}}{2}[1 + \sin(\omega(t) \cdot t)]$$

where $D_{max}$ is the maximum value of the amplitude of the dimming signal $d_{LED}$, equal to 100%, and $\omega(t)$ is a time-varying angular frequency that starts from an initial value $\omega_0$ and decreases with time according to the following linear function:

$$\omega(t) = \omega_0 - \frac{\omega_0}{T_{max}}t$$

where $T_{max}$ is a maximum time interval in which the angular frequency $\omega(t)$ may vary; in particular, $T_{max}$ may coincide with a maximum time of emission of UV light irradiation by the LEDs 210 during photocatalysis, whereby the actual time $T_C$ during which the controlling device 250 activates the LEDs 210 is not longer than $T_{max}$ (i.e. $T_C \leq T_{max}$). However, it must be understood that, possibly also in function of the polluting species to remove that is contained in the fluid to be purified, the value of $D_{max}$ and/or the maximum time interval $T_{max}$ may be freely set ($D_{max}$ at any value lower than or equal to 100%) and/or the specific function followed by the varying angular frequency $\omega(t)$ may be of any type, for instance it may be increasing (instead of decreasing) starting from an initial value $\omega_0$ according to a linear function, or it may be also increasing and/or decreasing according to a function different from the linear one, for instance according to an exponential function. By way of mere example and not by way of limitation, the varying angular frequency $\omega(t)$ may decrease with time starting from an initial value $\omega_0$ according to the following exponential function:

$$\omega(t) = \omega_0 e^{-t/\tau}$$

where $\tau$ is a time constant the constant value of which may be freely set, possibly also in function of the polluting species to remove that is contained in the fluid to be purified.

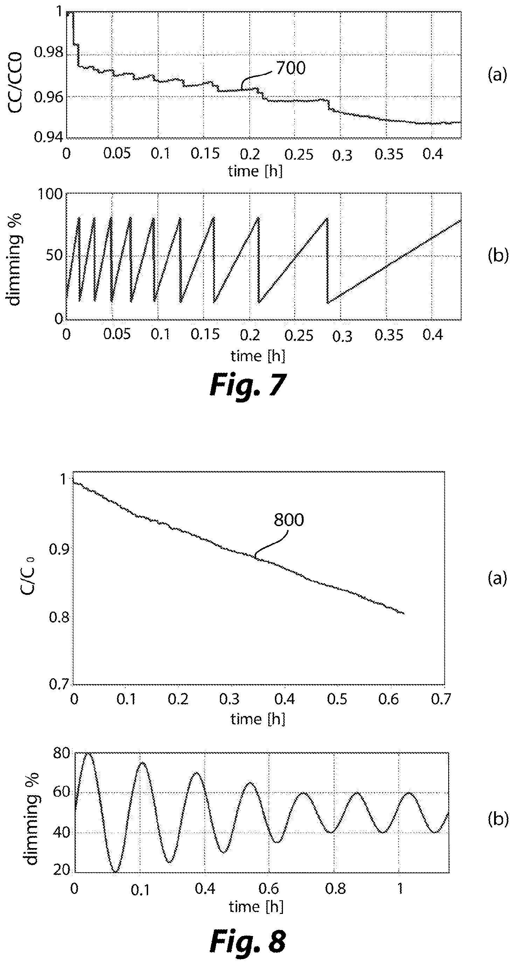

Figure 7a shows the decay 700 over time of the concentration normalised with respect to the initial value of the polluting species (i.e. methylene blue) when the waveform of the dimming signal $d_{LED}$ is a sawtooth function (i.e. a triangular function with fall time $T_f$ much shorter than the rise time $T_r$), shown in Figure 7b, with constant peak-peak amplitude and time-varying frequency, hence with varying period $T_d$ :

$$d_{LED}(t) = \begin{cases} \dfrac{D_{max}}{T_r(t)}t, & t \in [0, T_r(t)] \\ D_{max} - \dfrac{D_{max}}{T_f(t)}t, & t \in [T_r(t), T_d(t)] \end{cases}$$

with $T_f(t) = T_d(t)$-$T_r(t)$, where $D_{max}$ is the maximum value of the amplitude of the dimming signal $d_{LED}$, equal to 60%, $T_d(t)$ is the varying period of the waveform that starts from an initial value $T_{d0}$ and that decreases with time according to the following linear function:

$$T_d(t) = T_{d0} - \frac{T_{d0}}{T_{max}} t$$

where $T_{max}$ is a maximum time interval in which the period $T_d(t)$ may vary; in particular, $T_{max}$ may coincide with a maximum time interval of emission of UV light irradiation by the LEDs 210 during photocatalysis, whereby the actual time $T_C$ during which the controlling device 250 activates the LEDs 210 is not longer than $T_{max}$ (i.e. $T_C \leq T_{max}$), and where $T_r(t)$ and $T_f(t)$ are respectively the rise time and the fall time of the waveform which start from respective initial values $T_{r0}$ and $T_{f0}$ satisfying the condition

$$T_{r0} + T_{f0} = T_{d0},$$

and which decrease with time according to the following linear functions

$$T_r(t) = T_{r0} - \frac{T_{r0}}{T_{max}} t$$

$$T_f(t) = T_{f0} - \frac{T_{f0}}{T_{max}} t$$

However, it must be understood that, possibly also in function of the polluting species to remove that is contained in the fluid to be purified, the value of $D_{max}$ and/or the maximum time interval $T_{max}$ may be freely set ($D_{max}$ at any value lower than or equal to 100%) and/or the specific function followed by the varying period $T_d(t)$ may be of any type, for instance it may be increasing (instead of decreasing) starting from an initial value $T_{d0}$ according to a linear function, or it may be also increasing and/or decreasing according to a function different from the linear one, for instance according to an exponential function; similarly, also the rise time $T_r(t)$ and the fall time $T_f(t)$ of the waveform may be varying with time differently from a linearly decreasing function, and they may be varying according to functions different from each other and from the function of the varying period $T_d(t)$, provided that they satisfy the following condition:

$$T_f(t) = T_d(t)\text{-}T_r(t);$$

for instance, the rise time $T_r(t)$ may linearly decrease with a decrease rate larger with respect to a linear increase rate of the fall time $T_f(t)$, whereby the whole varying period $T_d(t)$ decreases. By way of mere example, and not by way of limitation, the varying period $T_d(t)$ and the rise time $T_r(t)$ and the fall time $T_f(t)$ of the triangular waveform may decrease with time starting from respective initial values $T_{d0}$, $T_{r0}$ and $T_{f0}$ (with $T_{r0} + T_{f0} = T_{d0}$) according to the following exponential functions:

$$T_d(t) = T_{d0}e^{-t/\tau}$$

$$T_r(t) = T_{r0}e^{-t/\tau}$$

$$T_f(t) = T_{f0}e^{-t/\tau}$$

where $\tau$ is a time constant the constant value of which may be freely set, possibly also in function of the polluting species to remove that is contained in the fluid to be purified.

Figure 8a shows the decay 800 over time of the concentration normalised with respect to the initial value of the polluting species (i.e. methylene blue) when the waveform of the dimming signal $d_{LED}$ is a sinusoidal function, shown in Figure 8b, with fixed frequency, in particular with period $T$=10 minutes, and time-varying peak-peak amplitude:

$$d_{LED}(t) = D_0 + D_{max}(t) \cdot \sin(\omega t)$$

where $D_0$ is a constant offset value of the amplitude of the dimming signal $d_{LED}$, equal to 50%, and $D_{max}(t)$ is the time-varying portion of the amplitude of the sinusoidal signal, that adds up to the offset value $D_0$, that starts from an initial value $D_{max0}$, equal to 50%, and that decreases with time according to the following linear function:

$$D_{max}(t) = D_{max0} - \frac{(D_{max0} - D_k)}{T_{max}} t$$

where $T_{max}$ is a maximum time interval (equal to 40 minutes) in which the period $T_d(t)$ may vary and at the end of which the varying portion $D_{max}(t)$ assumes a constant value $D_k$ equal to 10%. However, it must be understood that, possibly also in function of the polluting species to remove that is contained in the fluid to be purified, the offset value $D_0$ may be freely set at any value lower than 100% and/or the value $D_{max0}$ may be freely set at any value lower than or equal to (100% - $D_0$) and/or the value $D_k$ may be freely set at any value lower than $D_{max0}$ and/or the maximum time interval $T_{max}$ may be freely set (in particular, $T_{max}$ may coincide with a maximum time of emission of UV light irradiation by the LEDs 210 during photocatalysis, whereby the actual time $T_C$ during which the controlling device 250 activates the LEDs 210 is not longer than $T_{max}$ - i.e. $T_C \leq T_{max}$) and/or the specific function followed by the varying portion $D_{max}(t)$ of the amplitude may be of any type, for instance it may be increasing (instead of decreasing) starting from an initial value $D_{max0}$ according to a linear function, or it may be also increasing and/or decreasing according to a function different from the linear one, for instance according to an exponential function. By way of mere example and not by way of limitation, the varying portion $D_{max}(t)$ of the amplitude may decrease with time starting from an initial value $D_{max0}$ according to the following exponential function:

$$D_{max}(t) = D_{max0} e^{-t/\tau}$$

where $\tau$ is a time constant the constant value of which may be freely set, possibly also in function of the polluting species to remove that is contained in the fluid to be purified.

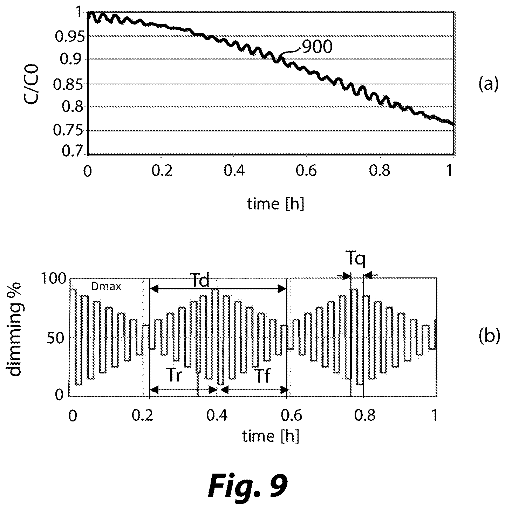

Figure 9a shows the decay 900 over time of the concentration normalised with respect to the initial value of the polluting species (i.e. methylene blue) when the waveform of the dimming signal $d_{LED}$ is a square-wave function, shown in Figure 9b, having fixed frequency, and hence fixed period, and peak-peak amplitude varying according to a triangular wave. In greater detail, the dimming signal $d_{LED}$ is a square-wave function as follows:

$$d_{LED}(t) = \begin{cases} D_0 + D_{max}(t), & t \in \left[0, \frac{T_q}{2}\right] \\ D_0 + D_{max}(t), & t \in \left[\frac{T_q}{2}, T_q\right] \end{cases}$$

where $T_q$ is the period of the square waveform, equal to 2 minutes, $D_0$ is a constant offset value of the amplitude of the dimming signal $d_{LED}$, equal to 50%, and $D_{max}(t)$ is the time-varying portion of the amplitude of the square-wave signal, that adds up to the offset value $D_0$, and that varies according to a triangular-wave function between a lower value $D_{low}$, equal to 10%, and an upper value $D_{up}$, equal to 40%, having period $T_{dD}$, wherein in each period starting at an instant assumed as $t$=0 it is:

$$D_{max}(t) = \begin{cases} D_{low} + \frac{D_{up}}{T_{rD}} t, & t \in [0, T_{rD}] \\ D_{up} - \frac{(D_{up} - D_{low})}{T_{fD}(t)} t, & t \in [T_{rD}, T_{dD}] \end{cases}$$

with $T_{fD} = T_{dD} - T_{rD}$, where $T_{rD}$ and $T_{fD}$ are respectively the rise time and the fall time of the triangular-wave function according to which the varying portion $D_{max}(t)$ of the amplitude of the square-wave signal varies, which are equal to each other and equal to 10 minutes in Figure 9b. However, it must be understood that, possibly also in function of the polluting species to remove that is contained in the fluid to be purified, the value of the period of the square waveform $T_q$ may be freely set and/or the constant offset value $D_0$ of the amplitude of the dimming signal $d_{LED}$ may be freely set at any value larger than 0% and lower than 100% and/or the lower value $D_{low}$ of the triangular wave according to which the varying portion $D_{max}(t)$ of the amplitude of the square-wave signal varies may be freely set at any value larger than 0% and lower than (100% - $D_0$) and/or the upper value $D_{up}$ of the triangular wave according to which the varying portion $D_{max}(t)$ of the amplitude of the square-wave signal varies may be freely set at any value larger than the lower value $D_{low}$ and lower than (100% - $D_0$) and/or the variation period $T_{dD}$ and the rise and fall times $T_{rD}$ and $T_{fD}$ of the varying portion $D_{max}(t)$ of the amplitude of the square-wave signal may be freely set at any values satisfying the following conditions:

$$\begin{cases} T_{dD} > T_q \\ T_{dD} = T_{rD} + T_{fD} \end{cases}$$

Moreover, also the specific function according to which the amplitude of the square-wave signal varies may be of any type, for instance it may be increasing or decreasing according to a linear or exponential function.

The results of the conducted tests shown in Figures 3-9 demonstrate that the photocatalysis carried out with proper modulations of the dimming signal $d_{LED}$ controlled by the device 250 controlling the buck converter 240 of the purifying apparatus according to the invention produces a better decay of the concentration of the polluting species (i.e. methylene blue). Moreover, the purification process occurs with a higher energy efficiency with respect to the case of constant values of dimming duty-cycle $t_{ON}/T_{dim}$, since the light sources do not operate under permanent switching-on conditions.

In particular, the results of the tests conducted with proper modulations of the dimming signal $d_{LED}$ shown in Figures 4-9 demonstrate that the decay of the concentration of the polluting species (i.e. methylene blue) depends on the brightness of the LEDs 210 of the purifying apparatus according to the invention, and hence on the number of photons impacting on the catalyst, and that such decay is worst for values of dimming duty-cycle $t_{ON}/T_{dim}$ which are too low (lower than 20%), but most importantly for values of dimming duty-cycle $t_{ON}/T_{dim}$ which are very high (higher than 80%).

Optionally, the converter apparatus 20 may stop the switching-on of the LEDs 210 when said (at least one) sensor device 60 detects that the concentration of (at least) one respective polluting substance has dropped below (or it has reached) a threshold value.

The inventors have ascertained that the purifying apparatus according to the invention allows to apply forms of modulation of the dimming signal $d_{LED}$, whereby the latter is time-varying, and the more parameters of the dimming signal $d_{LED}$ are caused to vary, the more substantial unexpected improvements of the rate of removal of polluting substances are obtained.

Although the purifying apparatus according to the invention has been described with reference to a stand-alone application supplied by a photovoltaic source, the present invention is applicable to any illumination system, having LEDs or even employing light sources different from LEDs, that implements dimming regulation and that is supplied by any energy source, including the mains electrical energy.

The preferred embodiments of this invention have been described and a number of variations have been suggested hereinbefore, but it should be understood that those skilled in the art can make other variations and changes without so departing from the scope of protection thereof, as defined by the attached claims.

**Claims**

1. Purifying apparatus comprising a reactor (40) and one or more light sources (210), wherein the reactor (40) is configured to receive a light irradiation emitted by said one or more light sources (210) and to contain inside a fluid (50) to be purified and at least one catalyst configured to absorb said light irradiation and to activate at least one photocatalysis that removes at least one polluting substance inside the fluid (50), wherein the purifying apparatus comprises switching means (240) configured to be supplied by at least one power supply apparatus (10, 30, 220) and to drive said one or more light sources (210) in dimming mode according to a dimming duty-cycle $t_{ON}/T_{dim}$, wherein said one or more light sources (210) are kept on for a switching-on time $t_{ON}$ within a dimming period $T_{dim}$, where $t_{ON} \leq T_{dim}$, and kept off for a switching-off time $t_{OFF}$, equal to ($T_{dim} - t_{ON}$), wherein the purifying apparatus comprises processing and control means (230, 250, 270) configured to send to said switching means (240) a dimming signal $d_{LED}(t)$, that is time-varying, equal to the instantaneous dimming duty-cycle $t_{ON}/T_{dim}$ according to which said switching means (240) drives said one or more light sources (210) in dimming mode, the purifying apparatus being **characterised in that** the dimming signal $d_{LED}(t)$ that said processing and control means (230, 250, 270) is configured to send to said switching means (240) has a waveform selected from or equal to a combination of waveforms selected from the group comprising or consisting of:

- periodic waveforms,
- pseudo-periodic waveforms.

2. Purifying apparatus according to claim 1, **characterised in that** the periodic waveforms comprise or consist of sinusoidal waveforms, triangular waveforms, sawtooth waveforms, square-wave waveforms and combinations thereof.

3. Purifying apparatus according to claim 2, **characterised in that** the waveform of the dimming signal $d_{LED}(t)$ is selected from the group comprising or consisting of:

a sinusoidal function, as follows:

$$d_{LED}(t) = \frac{D_{max}}{2}[1 + \sin(\omega t)]$$

where $D_{max}$ is a maximum value of an amplitude of the dimming signal $d_{LED}(t)$, lower than or equal to 100%, and $\omega$ is an angular frequency of the dimming signal $d_{LED}(t)$, and
a triangular function with period $T_d$, wherein in each period starting at an instant assumed as $t=0$ it is:

$$d_{LED}(t) = \begin{cases} \dfrac{D_{max}}{T_r}t, & t \in [0, T_r] \\ D_{max} - \dfrac{D_{max}}{T_f}t, & t \in [T_r, T_d] \end{cases}$$

with $T_f=T_d-T_r$, where $D_{max}$ is a maximum value of an amplitude of the dimming signal $d_{LED}(t)$, lower than or equal to 100%, and $T_r$ and $T_f$ are respectively the rise time and the fall time of the waveform, optionally equal to each other and equal to the half of the period $T_d$.

4. Purifying apparatus according to claim 1, **characterised in that** the pseudo-periodic waveforms comprise or consist of sinusoidal waveforms having time-varying frequency and/or amplitude, triangular waveforms having time-varying frequency and/or amplitude, sawtooth waveforms having time-varying frequency and/or amplitude, square-wave waveforms having time-varying frequency and/or amplitude and combinations thereof.

5. Purifying apparatus according to claim 4, **characterised in that** the waveform of the dimming signal $d_{LED}(t)$ is a sinusoidal function having constant peak-peak amplitude and time-varying frequency, as follows:

$$d_{LED}(t) = \frac{D_{max}}{2}[1 + \sin(\omega(t)t)]$$

where $D_{max}$ is a maximum value of the amplitude of the dimming signal $d_{LED}(t)$, lower than or equal to 100%, and $\omega(t)$ is a time-varying angular frequency that optionally starts from an initial value $\omega_0$, wherein the varying angular frequency $\omega(t)$ more optionally decreases with time, still more optionally according to a function selected from the group comprising a linear function, as follows:

$$\omega(t) = \omega_0 - \frac{\omega_0}{T_{max}}t$$

where $T_{max}$ is a maximum time interval in which the angular frequency $\omega(t)$ may vary, and an exponential function, as follows:

$$\omega(t) = \omega_0 e^{-t/\tau}$$

where $\tau$ is a time constant.

6.  Purifying apparatus according to claim 4, **characterised in that** the waveform of the dimming signal $d_{LED}(t)$ is a triangular function with constant peak-peak amplitude and time-varying frequency, as follows:

$$d_{LED}(t) = \begin{cases} \dfrac{D_{max}}{T_r(t)}t, & t \in [0, T_r(t)] \\[2ex] D_{max} - \dfrac{D_{max}}{T_f(t)}t, & t \in [T_r(t), T_d(t)] \end{cases}$$

with $T_f(t) = T_d(t) - T_r(t)$, where $D_{max}$ is a maximum value of the amplitude of the dimming signal $d_{LED}(t)$ lower than or equal to 100%, $T_d(t)$ is a varying period of the dimming signal $d_{LED}(t)$ and $T_r(t)$ and $T_f(t)$ are respectively a varying rise time and a varying fall time of the dimming signal $d_{LED}(t)$, wherein the varying period $T_d(t)$ and the varying rise and fall times $T_r(t)$ and $T_f(t)$ optionally start from respective initial values $T_{d0}$, $T_{r0}$ and $T_{f0}$ satisfying the condition

$$T_{r0} + T_{f0} = T_{d0},$$

wherein the varying period $T_d(t)$ and the varying rise and fall times $T_r(t)$ and $T_f(t)$ more optionally decrease with time, still more optionally according to a triplet of respective functions selected from the group comprising a triplet of linear functions, as follows:

$$T_d(t) = T_{d0} - \frac{T_{d0}}{T_{max}}t$$

$$T_r(t) = T_{r0} - \frac{T_{r0}}{T_{max}}t$$

$$T_f(t) = T_{f0} - \frac{T_{f0}}{T_{max}}t$$

where $T_{max}$ is a maximum time interval in which the period $T_d(t)$ may vary, and a triplet of exponential functions, as follows:

$$T_d(t) = T_{d0}e^{-t/\tau}$$

$$T_r(t) = T_{r0}e^{-t/\tau}$$

$$T_f(t) = T_{f0}e^{-t/\tau}$$

where $\tau$ is a time constant.

7.  Purifying apparatus according to claim 4, **characterised in that** the waveform of the dimming signal $d_{LED}(t)$ is a sinusoidal function with fixed frequency and time-varying peak-peak amplitude, as follows:

$$d_{LED}(t) = D_0 + D_{max}(t) \cdot \sin(\omega t)$$

where $D_0$ is a constant offset value of the amplitude of the dimming signal $d_{LED}(t)$, lower than or equal to 100%, and $D_{max}(t)$ is a time-varying portion of the amplitude of the sinusoidal signal, wherein the varying portion $D_{max}(t)$ optionally starts from an initial value $D_{max0}$ lower than or equal to (100% - $D_0$), wherein the varying portion $D_{max}(t)$ more optionally decreases with time, still more optionally according to a function selected from the group comprising a linear function, as follows:

$$D_{max}(t) = D_{max0} - \frac{(D_{max0} - D_k)}{T_{max}}t$$

where $T_{max}$ is a time interval in which the period $T_d(t)$ may vary and at the end of which the varying portion $D_{max}(t)$ assumes a constant value $D_k$ lower than $D_{max0}$, and an exponential function, as follows:

$$D_{max}(t) = D_{max0}e^{-t/\tau}$$

where $\tau$ is a time constant.

8. Purifying apparatus according to claim 4, **characterised in that** the waveform of the dimming signal $d_{LED}(t)$ is a square-wave function having fixed frequency and peak-peak amplitude varying according to a triangular wave, as follows:

$$d_{LED}(t) = \begin{cases} D_0 + D_{max}(t), & t \in \left[0, \frac{T_q}{2}\right] \\ D_0 + D_{max}(t), & t \in \left[\frac{T_q}{2}, T_q\right] \end{cases}$$

where $T_q$ is a fixed period of the square waveform, $D_0$ is a constant offset value of the amplitude of the dimming signal $d_{LED}(t)$ larger than 0% and lower than 100%, and $D_{max}(t)$ is a time-varying portion of the amplitude of the dimming signal $d_{LED}(t)$, wherein the varying portion $D_{max}(t)$ optionally varies according to a triangular-wave function between a lower value $D_{low}$, larger than 0% and lower than (100% - $D_0$), and an upper value $D_{up}$, larger than the lower value $D_{low}$ and lower than (100% - $D_0$), having period $T_{dD}$ longer than $T_q$, wherein in each period starting at an instant assumed as t=0 it is:

$$D_{max}(t) = \begin{cases} D_{low} + \frac{D_{up}}{T_{rD}}t, & t \in [0, T_{rD}] \\ D_{up} - \frac{(D_{up} - D_{low})}{T_{fD}(t)}t, & t \in [T_{rD}, T_{dD}] \end{cases}$$

with $T_{fD} = T_{dD} - T_{rD}$, where $T_{rD}$ and $T_{fD}$ are respectively a rise time and a fall time of the triangular-wave function according to which the varying portion $D_{max}(t)$ of the square-wave signal varies, wherein $T_{rD}$ and $T_{fD}$ are more optionally equal to each other.

9. Purifying apparatus according to any one of the preceding claims, **characterised in that** said switching means comprises a switching DC-DC buck converter (240) and that said processing and control means comprises a first controlling device (250) configured to send to the switching DC-DC buck converter (240) the dimming signal $d_{LED}(t)$.

10. Purifying apparatus according to any one of the preceding claims, **characterised in that** said one or more light sources (210) are selected from the group comprising or consisting of LED diodes, compact fluorescent lamps, and incandescent lamps.

**11.** Purifying apparatus according to claim 10, **characterised in that** said one or more light sources (210) are one or more ultraviolet LED diodes, whereby the reactor (40) is configured to receive an UV light irradiation emitted by said one or more ultraviolet LED diodes (210).

**12.** Purifying apparatus according to any one of the preceding claims, **characterised in that** said at least one power supply apparatus (10, 30, 220) is selected from the group comprising a mains, accumulators, powered energy generators and renewable energy sources selected from the group comprising photovoltaic panels, power wind sources, fuel cells, and biomass energy sources.

**13.** Purifying apparatus according to claim 12, when depending on claim 9, **characterised in that** said at least one power supply apparatus comprises a photovoltaic panel (10) the output of which is connected to a switching boost converter (220), wherein the output of the boost converter (220) is connected to the switching DC-DC buck converter (240), said at least one power supply apparatus further comprising a battery pack (30) connected to the output of the switching boost converter (220), wherein said processing and control means further comprises a second controlling device (230), connected to the output of the photovoltaic panel (10), that is configured to execute a tracking of the maximum power point of the photovoltaic panel (10) and to send to the switching boost converter (220) a control signal $d_{MPP}$ configured to regulate the switching boost converter (220) for drawing maximum power from the photovoltaic panel (10), said processing and control means also comprising a third controlling device (270) connected to the battery pack (30) and to the first controlling device (250), wherein the third controlling device (270) is configured to make the identification of a charge state of the battery pack (30) for controlling the battery pack (30) so that the latter compensates variations of instant power drawn from the photovoltaic panel (10) and for charging the battery pack (30), whereby the switching boost converter (220), the switching DC-DC buck converter (240), the first controlling device (250), the second controlling device (230), and the third controlling device (270) are part of a light energy conversion apparatus (20).

**14.** Method for purifying a fluid (50) to be purified having at least one polluting substance, wherein the fluid (50) is contained inside a reactor (40) configured to receive a light irradiation emitted by one or more light sources (210), wherein the reactor (40) contains inside at least one catalyst configured to absorb said light irradiation and to activate at least one photocatalysis that removes said at least one polluting substance, the method comprising the following step:

A. driving said one or more light sources (210) in dimming mode according to a dimming duty-cycle $t_{ON}/T_{dim}$, wherein said one or more light sources (210) are kept on for a switching-on time $t_{ON}$ within a dimming period $T_{dim}$, where $t_{ON} \leq T_{dim}$, and kept off for a switching-off time $t_{OFF}$, equal to ($T_{dim}$ - $t_{ON}$), whereby said one or more light sources (210) are driven in dimming mode according to a dimming signal $d_{LED}(t)$ equal to the instantaneous dimming duty-cycle $t_{ON}/T_{dim}$, the method being **characterised in that** the dimming signal $d_{LED}(t)$ has a waveform selected from or equal to a combination of waveforms selected from the group comprising or consisting of:

- periodic waveforms,
- pseudo-periodic waveforms.

**15.** Purifying method according to claim 13, **characterised in that** the waveform of the dimming signal $d_{LED}(t)$ is selected from the group comprising sinusoidal waveforms, triangular waveforms, sawtooth waveforms, square-wave waveforms, optionally having time-varying frequency and/or amplitude, and combinations thereof.

**Patentansprüche**

**1.** Reinigungsvorrichtung, die einen Reaktor (40) und eine oder mehrere Lichtquellen (210) umfasst, wobei der Reaktor (40) so konfiguriert ist, dass er eine von der einen oder mehreren Lichtquellen (210) emittierte Lichtstrahlung empfängt und ein zu reinigendes Fluid (50) und mindestens einem Katalysator aufnehmen kann, wobei der katalysator konfiguriert ist, um die Lichteinstrahlung zu absorbieren und mindestens eine Photokatalyse zu aktivieren, die mindestens eine Schadstoffsubstanz im Fluid (50) entfernt, wobei die Reinigungsvorrichtung ein Schaltmittel (240) umfasst, die konfiguriert ist um durch mindestens eine Stromversorgungsvorrichtung (10, 30, 220) beaufschlagt zu werden und die eine oder mehreren Lichtquellen (210) im Dimmmodus gemäß einem Dimm-Arbeitszyklus $t_{ON}/T_{dim}$, anzusteuern, wobei die eine oder mehreren Lichtquellen (210) für eine Einschaltzeit $t_{ON}$ innerhalb einer Dimmperiode $T_{dim}$ eingeschaltet bleiben, wobei $t_{ON} \leq T_{dim}$ ist, und für eine Ausschaltzeit $t_{OFF}$ gleich ($T_{dim} - t_{ON}$) ausgeschaltet bleiben, wobei die Reinigungsvorrichtung Verarbeitungs- und Steuermittel umfasst (230, 250, 270), die konfiguriert sind zum Senden eines zeitveränderlichen Dimmsignals $d_{LED}(t)$ an das Schaltmittel (240), wobei das zeitveränderliche Dimmsignal $d_{LED}(t)$ gleich dem momentanen Dimmarbeitszyklus $t_{ON}/T_{dim}$, gemäß dem das Schaltmittel (240) die eine oder mehreren Lichtquellen (210) im Dimmmodus ansteuert, wobei die Reinigungsvorrichtung **dadurch gekennzeichnet ist, dass** das Dimmsignal $d_{LED}(t)$, das die Verarbeitungs- und Steuereinrichtung (230, 250, 270) konfiguriert ist an die Schalteinrichtung (240) zu senden, eine Wellenform hat, die ausgewählt ist oder gleich ist einer Kombination von Wellenformen, ausgewählt aus der Gruppe umfassend oder bestehend aus:

- periodische Wellenformen,
- pseudoperiodische Wellenformen.

2. Reinigungsvorrichtung nach Anspruch 1, **dadurch gekennzeichnet, dass** die periodischen Wellenformen Sinuswellenformen, Dreieckswellenformen, Sägezahnwellenformen, Rechteckwellenformen und Kombinationen davon umfassen oder daraus bestehen.

3. Reinigungsvorrichtung nach Anspruch 2, **dadurch gekennzeichnet, dass** die Wellenform des Dimmersignals $d_{LED}(t)$ ausgewählt ist aus der Gruppe umfassend oder bestehend aus:

eine Sinusfunktion wie folgt:

$$d_{LED}(t) = \frac{D_{max}}{2}[1 + \sin(\omega t)]$$

wobei $D_{max}$ ein Maximalwert einer Amplitude des Dimmsignals $d_{LED}(t)$ ist, der kleiner oder gleich 100% ist, und $\omega$ eine Winkelgeschwindigkeit des Dimmsignals $d_{LED}(t)$ ist, und

eine Dreiecksfunktion mit Periode $T_d$, wobei in jeder Periode, die zu einem als $t=0$ angenommen Zeitpunkt beginnt, gilt:

$$d_{LED}(t) = \begin{cases} \dfrac{D_{max}}{T_r}t, t \in [0, T_r] \\ D_{max} - \dfrac{D_{max}}{T_f}t, t \in [T_r, T_d] \end{cases}$$

mit $T_f = T_d - T_r$, dabei ist $D_{max}$ ein Maximalwert einer Amplitude des Dimmsignals $d_{LED}(t)$, die kleiner oder gleich 100% ist, und $T_r$ und $T_f$ sind jeweils die Anstiegszeit und die Abfallzeit der Wellenform, optional gleich zueinander und gleich der Hälfte der Periode $T_d$.

4. Reinigungsvorrichtung nach Anspruch 1, **dadurch gekennzeichnet, dass** die pseudoperiodischen Wellenformen sinusförmige Wellenformen mit zeitveränderlicher Frequenz und / oder Amplitude, dreieckige Wellenformen mit zeitveränderlicher Frequenz und / oder Amplitude sowie Sägezahnwellenformen mit zeitveränderlicher Frequenz und / oder Amplitude, Rechteckwellenformen mit zeitveränderlicher Frequenz und / oder Amplitude sowie Kombinationen davon umfassen oder daraus bestehen.

5. Reinigungsvorrichtung nach Anspruch 4, **dadurch gekennzeichnet, dass** die Wellenform des Dimmsignals $d_{LED}(t)$ eine Sinusfunktion mit konstanter Maximalamplitude und zeitveränderlicher Frequenz ist, wie folgt:

$$d_{LED}(t) = \frac{D_{max}}{2}[1 + \sin(\omega(t)t)]$$

dabei ist $D_{max}$ ein Maximalwert der Amplitude des Dimmsignals $d_{LED}(t)$, kleiner als oder gleich 100%, und $\omega(t)$ ist eine zeitabhängige Winkelgeschwindigkeit, die optional von einem Anfangswert $\omega_0$ ausgeht, wobei Die Variation

der Winkelgeschwindigkeit $\omega(t)$ nimmt mit der Zeit optional ab, noch optional entsprechend einer Funktion, die aus der Gruppe ausgewählt wird, die eine lineare Funktion umfasst, wie folgt:

$$\omega(t) = \omega_0 - \frac{\omega_0}{T_{max}} t$$

wobei $T_{max}$ ein maximales Zeitintervall ist, in dem die Winkelgeschwindigkeit $\omega(t)$ variieren kann, und eine Exponentialfunktion wie folgt:

$$\omega(t) = \omega_0 e^{-t/\tau}$$

wobei $\tau$ eine Zeitkonstante ist.

6.  Reinigungsvorrichtung nach Anspruch 4, **dadurch gekennzeichnet, dass** die Wellenform des Dimmsignals $d_{LED}(t)$ eine Dreieckfunktion mit konstanter Maximalamplitude und zeitveränderlicher Frequenz ist, wie folgt:

$$d_{LED}(t) = \begin{cases} \dfrac{D_{max}}{T_r(t)} t, t \in [0, T_r(t)] \\ D_{max} - \dfrac{D_{max}}{T_f(t)} t, t \in [T_r(t), T_d(t)] \end{cases}$$

mit $T_f(t) = T_d(t) - T_r(t)$, wobei $D_{max}$ ein Maximalwert der Amplitude des Dimmsignals $d_{LED}(t)$ kleiner oder gleich 100% ist, ist $T_d(t)$ eine variierende Periode des Dimmersignals $d_{LED}(t)$ und $T_r(t)$ bzw. $T_f(t)$ jeweils eine variierende Anstiegszeit und eine variierende Abfallzeit des Dimmersignals $d_{LED}(t)$ sind, wobei die variierende Periode $T_d(t)$ und der variierende Anstieg und Abfallzeiten $T_r(t)$ bzw. $T_f(t)$ optional von jeweiligen Anfangswerten $T_{d0}$, $T_{r0}$ und $T_{f0}$ beginnen, die die Bedingung erfüllen

$$T_{r0} + T_{f0} = T_{d0},$$

wobei die variierende Periode $T_d(t)$ und die variierenden Anstiegs- und Abfallzeiten $T_r(t)$ und $T_f(t)$ optional mit der Zeit abnehmen, weiter optional entsprechend einem Triplett der jeweiligen Funktionen, ausgewählt aus der Gruppe, die ein Triplett von linearen Funktionen umfasst, wie folgt:

$$T_d(t) = T_{d0} - \frac{T_{d0}}{T_{max}} t$$

$$T_r(t) = T_{r0} - \frac{T_{r0}}{T_{max}} t$$

$$T_f(t) = T_{f0} - \frac{T_{f0}}{T_{max}} t$$

wobei $T_{max}$ ein maximales Zeitintervall ist, in dem die Periode $T_d(t)$ variieren kann, und ein Triplett von Exponentialfunktionen wie folgt:

$$T_d(t) = T_{d0} e^{-t/\tau}$$

$$T_r(t) = T_{r0}e^{-t/\tau}$$

$$T_f(t) = T_{f0}e^{-t/\tau}$$

wobei $\tau$ eine Zeitkonstante ist.

7. Reinigungsvorrichtung nach Anspruch 4, **dadurch gekennzeichnet, dass** die Wellenform des Dimmsignals $d_{LED}(t)$ eine Sinusfunktion mit fester Frequenz und zeitvariabler Maximalamplitude ist, wie folgt:

$$d_{LED}(t) = D_0 + D_{max}(\text{t}) \cdot \sin(\omega t)$$

wobei $D_0$ ein konstanter Offset der Amplitude des Dimmungssignals $d_{LED}(t)$ ist, der niedriger als oder gleich 100% ist, und $D_{max}(t)$ ist ein zeitveränderlicher Teil der Amplitude des Sinussignals, wobei der veränderliche Teil $D_{max}(t)$ optional von einem Anfangswert $D_{max0}$ ausgeht, der kleiner oder gleich (100% - $D_0$) ist, wobei der variierende Anteil $D_{max}(t)$ optional mit der Zeit abnimmt, weiter optional entsprechend einer Funktion, die aus der Gruppe ausgewählt ist, die lineare Funktion umfasst wie folgt:

$$D_{max}(t) = D_{max0} - \frac{(D_{max0} - D_k)}{T_{max}}t$$

dabei ist $T_{max}$ ein Zeitintervall, in dem die Periode $T_d(t)$ variieren kann, und an dessen Ende der variierende Abschnitt $D_{max}(t)$ einen konstanten Wert $D_k$ kleines als $D_{max0}$ annimmt, und eine Exponentialfunktion wie folgt:

$$D_{max}(t) = D_{max0}e^{-t/\tau}$$

wobei $\tau$ eine Zeitkonstante ist.

8. Reinigungsvorrichtung nach Anspruch 4, **dadurch gekennzeichnet, dass** die Wellenform des Dimmsignals $d_{LED}(t)$ eine Rechteckwellenfunktion mit fester Frequenz und Peak-Peak-Amplitude ist, die gemäß einer Dreieckswelle wie folgt variiert:

$$d_{LED}(t) = \begin{cases} D_0 + D_{max}(t), t \in \left[0, \dfrac{T_q}{2}\right] \\ D_0 + D_{max}(t), t \in \left[\dfrac{T_q}{2}, T_q\right] \end{cases}$$

dabei ist $T_q$ eine feste Periode der Rechteckwellenform, $D_0$ ein konstanter Offset der Amplitude des Dimmsignals $d_{LED}(t)$, der größer als 0% und kleiner als 100% ist, und $D_{max}(t)$ ein zeitveränderlicher Teil der Amplitude des Dimmsignals $d_{LED}(t)$, wobei der variierende Anteil $D_{max}(t)$ optional gemäß einer Dreieckswellenfunktion zwischen einem niedrigeren Wert $D_{low}$, größer als 0% und niedriger als (100% - $D_0$) variiert, und ein oberer Wert $D_{up}$, größer als der untere Wert $D_{low}$ und niedriger als (100% - $D_0$), mit einer Periode $T_{dD}$ länger als $T_q$ ist, wobei in jeder Periode, die zu einem als $t=0$ angenommenen Zeitpunkt beginnt, gilt:

$$D_{max}(t) = \begin{cases} D_{low} + \dfrac{D_{up}}{T_{rD}}t, t \in [0, T_{rD}] \\ D_{up} - \dfrac{(D_{up} - D_{low})}{T_{fD}(t)}t, t \in [T_{rD}, T_{dD}] \end{cases}$$

mit $T_{fD} = T_{dD} - T_{rD}$, wobei $T_{rD}$ and $T_{fD}$ jeweils eine Anstiegszeit und eine Abfallzeit der Dreieckswellenfunktion sind, gemäß der der variierende Abschnitt $D_{max}(t)$ des Rechtecksignals variiert, wobei $T_{rD}$ und $T_{fD}$ weiter optional gleich sind.

9. Reinigungsvorrichtung nach einem der vorhergehenden Ansprüche, **dadurch gekennzeichnet, dass** die Schalteinrichtung einen schaltenden DC-DC-Abwärtswandler (240) umfasst und dass die Verarbeitungs- und Steuereinrichtung eine erste Steuervorrichtung (250) umfasst, die zum Senden des Dimmersignal $d_{LED}(t)$ an den DC-DC-Abwärtswandler (240) konfiguriert ist.

10. Reinigungsvorrichtung nach einem der vorhergehenden Ansprüche, **dadurch gekennzeichnet, dass** die eine oder mehreren Lichtquellen (210) aus der Gruppe ausgewählt sind, die LED-Dioden, Kompaktleuchtstofflampen und Glühlampen umfasst oder aus diesen besteht.

11. Reinigungsvorrichtung nach Anspruch 10, **dadurch gekennzeichnet, dass** die eine oder mehreren Lichtquellen (210) eine oder mehrere Ultraviolett-LED-Dioden sind, wobei der Reaktor (40) so konfiguriert ist, dass er eine UV-Lichtstrahlung empfängt, die von dem einen oder den mehreren Ultraviolettstrahlen emittiert wird LED-Dioden (210).

12. Reinigungsvorrichtung nach einem der vorhergehenden Ansprüche, **dadurch gekennzeichnet, dass** die mindestens eine Stromversorgungsvorrichtung (10, 30, 220) aus der Gruppe ausgewählt ist, die ein Netz, Akkumulatoren, Energieerzeuger und erneuerbare Energiequellen umfasst, letztere umfassend Photovoltaik-Panels, Windkraftanlagen, Brennstoffzellen und Biomasse-Energiequellen.

13. Reinigungsvorrichtung nach Anspruch 12, dieser rückbezogen auf Anspruch 9, **dadurch gekennzeichnet, dass** die mindestens eine Stromversorgungsvorrichtung eine Photovoltaikplatte (10) umfasst, deren Ausgang mit einem schaltenden Hochsetzsteller (220) verbunden ist, wobei der Ausgang der Hochsetzsteller (220) mit dem schaltenden DC-DC-Tiefsetzsteller (240) verbunden ist, wobei die mindestens eine Stromversorgungsvorrichtung ferner ein Batteriepaket (30) umfasst, das mit dem Ausgang des Hochsetzstellers (220) verbunden ist, wobei Verarbeitungs- und Steuereinrichtung ferner eine zweite Steuervorrichtung (230) umfasst, die mit dem Ausgang des Photovoltaikpanels (10) verbunden ist und so konfiguriert ist, dass sie eine Verfolgung des Punktes mit maximaler Leistung des Photovoltaikpanels (10) ausführt und an den Hochsetzsteller (220) ein Steuersignal $d_{MPP}$ sendet, das konfiguriert ist, um den schaltenden Hochsetzsteller (220) zu regeln, um maximale Leistung von der Photovoltaikplatte (10) zu beziehen, wobei die Verarbeitungs- und Steuereinrichtung auch eine dritte Steuerung Vorrichtung (270) umfasst, die mit dem Batteriepaket (30) und der ersten Steuervorrichtung (250) verbunden ist, wobei die dritte Steuervorrichtung (270) konfiguriert ist, um einen Ladezustand des Batteriepakets (30) zwecks Steuern des Batteriepakets (30) zu ermitteln, so dass letzteres Schwankungen der momentanen Leistung, die von der Photovoltaikplatte (10) zum Laden des Batteriepakets (30) entnommen wird, ausgleicht, wobei der schaltende Hochsetzsteller (220), der schaltenden DC-DC-Tiefsetzsteller (240), die erste Steuervorrichtung (250), die zweite Steuervorrichtung (230) und die dritte Steuervorrichtung (270) Teil einer Lichtenergieumwandlungsvorrichtung (20) sind.

14. Verfahren zum Reinigen eines zu reinigenden Fluids (50) mit mindestens einer Schadstoffsubstanz, wobei das Fluid (50) in einem Reaktor (40) enthalten ist, der zur Aufnahme einer von einer oder mehreren Lichtquellen (210) emittierten Lichtbestrahlung konfiguriert ist, wobei der Reaktor (40) im Innern mindestens einen Katalysator enthält, der konfiguriert ist, um die Lichteinstrahlung zu absorbieren und mindestens eine Photokatalyse zu aktivieren, die den mindestens einen Schadstoff entfernt, wobei das Verfahren den folgenden Schritt umfasst:

A. Ansteuern der einen oder der mehreren Lichtquellen (210) im Dimmmodus gemäß eines Dimmarbeitszykluses $t_{ON}/T_{dim}$, wobei die eine oder mehreren Lichtquellen (210) für eine Einschaltzeit $t_{ON}$ innerhalb einer Dimmperiode $T_{dim}$ eingeschaltet bleiben, wobei $t_{ON} \leq T_{dim}$ ist und für eine Ausschaltzeit $t_{OFF}$ gleich ($T_{dim} - t_{ON}$) ausgeschaltet bleibt, wobei die eine oder mehreren Lichtquellen (210) im Dimmmodus entsprechend einem Dimmsignal $d_{LED}(t)$ gleich dem momentanen Dimm-Tastverhältnis $to_N/T_{dim}$, angesteuert werden wobei das Verfahren **dadurch gekennzeichnet ist, dass** das Dimmersignal $d_{LED}(t)$ eine Wellenform aufweist, ausgewählt aus oder gleich einer Kombination von Wellenformen, ausgewählt aus der Gruppe umfassend oder bestehend aus:

    - periodische Wellenformen
    - pseudoperiodische Wellenformen.

15. Reinigungsverfahren nach Anspruch 13, **dadurch gekennzeichnet, dass** die Wellenform des Dimmsignals $d_{LED}(t)$

aus der Gruppe ausgewählt wird, die sinusförmige Wellenformen, Dreieckswellenformen, Sägezahnwellenformen und Rechteckwellenformen umfasst, die optional zeitabhängige Frequenz und / oder Amplitude sowie Kombinationen davon aufweisen.

## Revendications

1. Appareil de purification comprenant un réacteur (40) et une ou plusieurs sources de lumière (210), dans lequel le réacteur (40) est configuré pour recevoir une irradiation de lumière émise par lesdites une ou plusieurs sources de lumière (210) et pour contenir à l'intérieur un fluide (50) à purifier et au moins un catalyseur configuré pour absorber ladite irradiation de lumière et pour activer au moins une photocatalyse qui élimine au moins une substance polluante à l'intérieur du fluide (50), dans lequel l'appareil de purification comprend un moyen de commutation (240) configuré pour être approvisionné par au moins un appareil d'approvisionnement en puissance (10, 30, 220) et pour entraîner lesdites au moins une ou plusieurs sources de lumière (210) en mode de gradation selon un cycle de service de gradation $t_{ON}/T_{dim}$, dans lequel lesdites une ou plusieurs sources de lumière (210) sont maintenues actives pendant un temps d'activation $t_{ON}$ au sein d'une période de gradation $T_{dim}$, où $t_{ON} \leq T_{dim}$, et maintenues inactives pendant un temps de désactivation $T_{OFF}$, égal à ($T_{dim} - t_{ON}$), dans lequel l'appareil de purification comprend des moyens de traitement et de commande (230, 250, 270) configurés pour envoyer audit moyen de commutation (240) un signal de gradation $d_{LED}(t)$, qui varie avec le temps, égal au cycle de service de gradation instantané $t_{ON}/T_{dim}$ selon lequel ledit moyen de commutation (240) entraîne lesdites une ou plusieurs sources de lumière (210) en mode de gradation, l'appareil de purification étant **caractérisé en ce que** le signal de gradation $d_{LED}(t)$ que lesdits moyens de traitement et de commande (230, 250, 270) sont configurés pour envoyer audit moyen de commutation (240) a une forme d'onde sélectionnée à partir d'une ou égale à une combinaison de formes d'ondes sélectionnées dans le groupe comprenant ou constitué par :

   - des formes d'ondes périodiques,
   - des formes d'ondes pseudopériodiques.

2. Appareil de purification selon la revendication 1, **caractérisé en ce que** les formes d'ondes périodiques comprennent ou sont constituées par des formes d'ondes sinusoïdales, des formes d'ondes triangulaires, des formes d'ondes en dents de scie, des formes d'ondes carrées et des combinaisons de celles-ci.

3. Appareil de purification selon la revendication 2, **caractérisé en ce que** la forme d'onde du signal de gradation $d_{LED}(t)$ est sélectionnée dans le groupe comprenant ou constitué par :

   une fonction sinusoïdale, comme suit :

   $$d_{LED}(t) \;=\; \frac{Dmax}{2}[1 \;+\; \sin(\omega t)]$$

   où $D_{max}$ est une valeur maximale d'une amplitude du signal de gradation $d_{LED}(t)$, inférieure ou égale à 100 %, et $\omega$ est une fréquence angulaire du signal de gradation $d_{LED}(t)$, et
   une fonction triangulaire avec la période $T_d$, dans lequel dans chaque période démarrant à un instant supposé t = 0 elle est :

   $$d_{LED}(t) = \begin{cases} \dfrac{D_{max}}{T_r}t, & t \in [0, T_r] \\[2ex] D_{max} - \dfrac{D_{max}}{T_f}t, & t \in [T_r, T_d] \end{cases}$$

   avec $T_f = T_d - T_r$, où $D_{max}$ est une valeur maximale d'une amplitude du signal de gradation $d_{LED}(t)$, inférieure ou égale à 100 %, et $T_r$ et $T_f$ sont respectivement le temps de montée et le temps de baisse de la forme d'onde, facultativement égaux l'un à l'autre et égaux à la moitié de la période $T_d$.

4. Appareil de purification selon la revendication 1, **caractérisé en ce que** les formes d'ondes pseudopériodiques comprennent ou sont constituées par des formes d'ondes sinusoïdales ayant une fréquence et/ou une amplitude variant avec le temps, des formes d'ondes triangulaires ayant une fréquence et/ou une amplitude variant avec le temps, des formes d'ondes en dents de scie ayant une fréquence et/ou une amplitude variant avec le temps, des formes d'ondes carrées ayant une fréquence et/ou une amplitude variant avec le temps et des combinaisons de celles-ci.

**5.** Appareil de purification selon la revendication 4, **caractérisé en ce que** la forme d'onde du signal de gradation $d_{LED}(t)$ est une fonction sinusoïdale ayant une amplitude crête à crête constante et une fréquence variant avec le temps, comme suit :

$$d_{LED}(t) = \frac{Dmax}{2}[1 + \sin(\omega(t)t)]$$

où $D_{max}$ est une valeur maximale de l'amplitude du signal de gradation $d_{LED}(t)$, inférieure ou égale à 100 %, et $\omega(t)$ est une fréquence angulaire variant avec le temps qui démarre facultativement à partir d'une valeur initiale $\omega_0$, dans lequel la fréquence angulaire variable $\omega(t)$ décroît de manière plus facultative avec le temps, de manière encore plus facultative selon une fonction sélectionnée à partir du groupe comprenant une fonction linéaire, comme suit :

$$\omega(t) = \omega_0 - \frac{\omega 0}{Tmax}t$$

où $T_{max}$ est un intervalle de temps maximal dans lequel la fréquence angulaire $\omega(t)$ peut varier,
et une fonction exponentielle, comme suit :

$$\omega(t) = \omega_0 e^{-t/\tau}$$

où $\tau$ est une constante de temps.

**6.** Appareil de purification selon la revendication 4, **caractérisé en ce que** la forme d'onde du signal de gradation $d_{LED}(t)$ est une fonction triangulaire avec une amplitude crête à crête constante et une fréquence variant avec le temps, comme suit :

$$d_{LED}(t) = \begin{cases} \dfrac{D_{max}}{T_r(t)}t, & t \in [0, T_r(t)] \\ D_{max} - \dfrac{D_{max}}{T_f(t)}t, & t \in [T_r(t), T_d(t)] \end{cases}$$

avec $T_f(t) = T_d(t) - T_r(t)$, où $D_{max}$ est une valeur maximale de l'amplitude du signal de gradation $d_{LED}(t)$ inférieure ou égale à 100 %, $T_d(t)$ est une période variable du signal de gradation $d_{LED}(t)$ et $T_r(t)$ et $T_f(t)$ sont respectivement un temps de montée variable et un temps de baisse variable du signal de gradation $d_{LED}(t)$, dans lequel la période variable $T_d(t)$ et les temps de montée et de baisse variables $T_r(t)$ et $T_f(t)$ démarrent facultativement à partir de valeurs initiales respectives $T_{d0}$, $T_{r0}$ et $T_{f0}$ remplissant la condition

$$T_{r0} + T_{f0} = T_{d0},$$

dans lequel la période variable $T_d(t)$ et les temps de montée et de baisse variables $T_{r(t)}$ et $T_{f(t)}$ décroissent de manière plus facultative avec le temps, de manière encore plus facultative selon un triplet de fonctions respectives sélectionnées à partir du groupe comprenant un triplet de fonctions linéaires, comme suit :

$$T_d(t) = T_{d0} - \frac{Td0}{Tmax}t$$

$$T_r(t) \;=\; T_{r0} \;-\; \frac{Tr0}{Tmax}\mathrm{t}$$

$$T_f(t) \;=\; T_{f0} \;-\; \frac{Tf0}{Tmax}\mathrm{t}$$

où $T_{max}$ est un intervalle de temps maximal dans lequel la période $T_d(t)$ peut varier, et un triplet de fonctions exponentielles, comme suit :

$$T_d(t) \;=\; T_{d0}\mathrm{e}^{-t/\tau}$$

$$T_r(t) \;=\; T_{r0}\mathrm{e}^{-t/\tau}$$

$$T_f(t) \;=\; T_{f0}\mathrm{e}^{-t/\tau}$$

où $\tau$ est une constante de temps.

**7.** Appareil de purification selon la revendication 4, **caractérisé en ce que** la forme d'onde du signal de gradation $d_{LED}(t)$ est une fonction sinusoïdale avec une fréquence fixe et une amplitude crête à crête variant avec le temps, comme suit :

$$d_{LED}(t) \;=\; D_0 \;+\; D_{max}(t) \;\cdot\; \sin(\omega t)$$

où $D_0$ est une valeur de décalage constante de l'amplitude du signal de gradation $d_{LED}(t)$, inférieure ou égale à 100 %, et $D_{max(t)}$ est une portion variant avec le temps de l'amplitude du signal sinusoïdal, dans lequel la portion variable $D_{max(t)}$ démarre facultativement à partir d'une valeur initiale $D_{max0}$ inférieure ou égale à (100 % - $D_0$), dans lequel la portion variable $D_{max}(t)$ décroît de manière plus facultative avec le temps, de manière encore plus facultative selon une fonction sélectionnée à partir du groupe comprenant une fonction linéaire, comme suit :

$$D_{max}(t) \;=\; D_{max0} \;-\; \frac{(Dmax0 - Dk)}{Tmax}\, t$$

où $T_{max}$ est un intervalle de temps dans lequel la période $T_d(t)$ peut varier et à la fin duquel la portion variable $D_{max}(t)$ suppose une valeur constante $D_k$ inférieure à $D_{max0}$, et une fonction exponentielle, comme suit :

$$D_{max}(t) \;=\; D_{max0}\mathrm{e}^{-t/\tau}$$

où $\tau$ est une constante de temps.

**8.** Appareil de purification selon la revendication 4, **caractérisé en ce que** la forme d'onde du signal de gradation $d_{LED}(t)$ est une fonction d'onde carrée ayant une fréquence fixe et une amplitude crête à crête variant selon une onde triangulaire, comme suit :

$$d_{LED}(t) = \begin{cases} D_0 + D_{max}(t), & t \in \left[0, \dfrac{T_q}{2}\right] \\[2mm] D_0 + D_{max}(t), & t \in \left[\dfrac{T_q}{2}, T_q\right] \end{cases}$$

où $T_q$ est une période fixe de la forme d'onde carrée, $D_0$ est une valeur de décalage constante de l'amplitude du signal de gradation $d_{LED}(t)$ supérieure à 0 % et inférieure à 100 %, et $D_{max}(t)$ est une portion variant avec le temps de l'amplitude du signal de gradation $d_{LED}(t)$, dans lequel la portion variable $D_{max}(t)$ varie de manière facultative selon une fonction d'onde triangulaire entre une valeur basse $D_{low}$, supérieure à 0 % et inférieure à (100 % - $D_0$), et une valeur haute $D_{up}$, supérieure à la valeur basse $D_{low}$ et inférieure à (100 % - $D_0$), ayant une période $T_{dD}$ plus longue que $T_q$, dans lequel dans chaque période démarrant à un instant supposé $t = 0$ elle est :

$$D_{max}(t) = \begin{cases} D_{low} + \dfrac{D_{up}}{T_{rD}}t, & t \in [0, T_{rD}] \\ D_{up} - \dfrac{(D_{up} - D_{low})}{T_{fD}(t)}t, & t \in [T_{rD}, T_{dD}] \end{cases}$$

avec $T_{fD} = T_{dD} - T_{rD}$, où $T_{rD}$ et $T_{fD}$ sont respectivement un temps de montée et un temps de baisse de la fonction d'onde triangulaire selon laquelle la portion variable $D_{max}(t)$ du signal d'onde carrée varie, dans lequel $T_{rD}$ et $T_{fD}$ sont de manière plus facultative égaux l'un à l'autre.

9. Appareil de purification selon l'une quelconque des revendications précédentes, **caractérisé en ce que** ledit moyen de commutation comprend un convertisseur abaisseur CC-CC de commutation (240) et **en ce que** lesdits moyens de traitement et de commande comprennent un premier dispositif de commande (250) configuré pour envoyer au convertisseur abaisseur CC-CC de commutation (240) le signal de gradation $d_{LED}(t)$.

10. Appareil de purification selon l'une quelconque des revendications précédentes, **caractérisé en ce que** lesdites une ou plusieurs sources de lumière (210) sont sélectionnées à partir du groupe comprenant ou constitué par des diodes DEL, des lampes fluorescentes compactes et des lampes à incandescence.

11. Appareil de purification selon la revendication 10, **caractérisé en ce que** lesdites une ou plusieurs sources de lumière (210) sont une ou plusieurs diodes DEL ultraviolettes, moyennant quoi le réacteur (40) est configuré pour recevoir une irradiation de lumière UV émise par lesdites une ou plusieurs diodes DEL ultraviolettes (210).

12. Appareil de purification selon l'une quelconque des revendications précédentes, **caractérisé en ce que** ledit au moins un appareil d'approvisionnement en puissance (10, 30, 220) est sélectionné à partir du groupe comprenant un réseau électrique, des accumulateurs, des générateurs d'énergie alimentés et des sources d'énergie renouvelable sélectionnées à partir du groupe comprenant les panneaux photovoltaïques, les sources de puissance éolienne, les cellules de combustible et les sources d'énergie de biomasse.

13. Appareil de purification selon la revendication 12, lorsqu'elle dépend de la revendication 9, **caractérisé en ce que** ledit au moins un appareil d'approvisionnement en puissance comprend un panneau photovoltaïque (10) dont la sortie est connectée à un convertisseur rehausseur de commutation (220), dans lequel la sortie du convertisseur rehausseur (220) est connectée au convertisseur abaisseur CC-CC de commutation (240), ledit au moins un appareil d'approvisionnement en puissance comprenant en outre un bloc-batterie (30) connecté à la sortie du convertisseur rehausseur de commutation (220), dans lequel lesdits moyens de traitement et de commande comprennent en outre un deuxième dispositif de commande (230), connecté à la sortir du panneau photovoltaïque (10), qui est configuré pour exécuter un suivi du point de puissance maximale du panneau photovoltaïque (10) et pour envoyer au convertisseur rehausseur de commutation (220) un signal de commande $d_{MPP}$ configuré pour réguler le convertisseur rehausseur de commutation (220) pour tirer une puissance maximale du panneau photovoltaïque (10), lesdits moyens de traitement et de commande comprenant également un troisième dispositif de commande (270) connecté au bloc-batterie (30) et au premier dispositif de commande (250), dans lequel le troisième dispositif de commande (270) est configuré pour faire l'identification d'un état de charge du bloc-batterie (30) pour commander le bloc-batterie (30) de sorte que celui-ci compense des variations de puissance instantanée tirée du panneau photovoltaïque (10) et pour charger le bloc-batterie (30), moyennant quoi le convertisseur rehausseur de commutation (220), le convertisseur abaisseur CC-CC de commutation (240), le premier dispositif de commande (250), le deuxième dispositif de commande (230) et le troisième dispositif de commande (270) font partie d'un appareil de conversion d'énergie lumineuse (20).

14. Procédé pour purifier un fluide (50) à purifier ayant au moins une substance polluante, dans lequel le fluide (50) est contenu à l'intérieur d'un réacteur (40) configuré pour recevoir une irradiation de lumière émise par une ou plusieurs sources de lumière (210), dans lequel le réacteur (40) contient à l'intérieur au moins un catalyseur configuré pour absorber ladite irradiation de lumière et pour activer au moins une photocatalyse qui élimine ladite au moins une substance polluante, le procédé comprenant l'étape suivante :

A. l'entraînement desdites une ou plusieurs sources de lumière (210) en mode de gradation selon un cycle de service de gradation $t_{ON}/T_{dim}$, dans lequel lesdites une ou plusieurs sources de lumière (210) sont maintenues actives pendant un temps d'activation $t_{ON}$ au sein d'une période de gradation $T_{dim}$, où $t_{ON} \leq T_{dim}$, et maintenues inactives pendant un temps de désactivation $T_{OFF}$, égal à $(T_{dim} - t_{ON})$, moyennant quoi lesdites une ou plusieurs sources de lumière (210) sont entraînées en mode de gradation selon un signal de gradation $d_{LED}(t)$ égal au cycle de service de gradation instantané $t_{ON}/T_{dim}$,
le procédé étant **caractérisé en ce que** le signal de gradation $d_{LED}(t)$ a une forme d'onde sélectionnée à partir d'une ou égale à une combinaison de formes d'ondes sélectionnées à partir du groupe comprenant ou constitué par :

- des formes d'ondes périodiques,
- des formes d'ondes pseudopériodiques.

15. Procédé de purification selon la revendication 13, **caractérisé en ce que** la forme d'onde du signal de gradation $d_{LED}(t)$ est sélectionnée dans le groupe comprenant des formes d'ondes sinusoïdales, des formes d'ondes triangulaires, des formes d'ondes en dents de scie, des formes d'ondes carrées, ayant facultativement une fréquence et/ou une amplitude variant avec le temps, et des combinaisons de celles-ci.

**Fig. 1**

**Fig. 2**

**Fig. 3**

**Fig. 4**

**Fig. 5**

**Fig. 6**

**Fig. 7**

**Fig. 8**

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012010645 A1
- US 2008311011 A1
- US 20100176067 A1
- WO 2009144764 A2

### Non-patent literature cited in the description

- **N. FEMIA et al.** Light-to-Light: PV-Fed LED Lighting Systems. *Power Electronics, IEEE Transactions,* August 2013, vol. 28 (8), 4063-4073
- **OLUWATOSIN I. TOKODE et al.** Effect of controlled periodic-based illumination on the photonic efficiency of photocatalytic degradation of methyl orange. *Journal of Catalysis,* 2012, vol. 290, 138-142
- **KOROVIN E. et al.** UV-LED TiO2 photocatalytic oxidation of acetone vapor: Effect of high frequency controlled periodic illumination. *Applied Catalysis B: Environmental,* August 2014, vol. 163, 143-149